# EUROPÄISCHE PATENTSCHRIFT

(11) **EP 3 775 864 B1**
(45) Veröffentlichungstag und Bekanntmachung des Hinweises auf die Patenterteilung: **03.12.2025**
(21) Anmeldenummer: 19716353.8
(22) Anmeldetag: 03.04.2019
(51) Int. Cl.: G01N 27/622

(54) **IONENMOBILITÄTSSPEKTROMETER UND VERFAHREN ZUR ANALYSE VON PROBEN DURCH IONENMOBILITÄTSSPEKTROMETRIE**
ION MOBILITY SPECTROMETER AND METHOD FOR ANALYZING SAMPLES BY ION MOBILITY SPECTROMETRY
SPECTROMÈTRE À MOBILITÉ IONIQUE ET PROCÉDÉ D'ANALYSE DES ÉCHANTILLONS PAR LA SPECTROMÉTRIE À MOBILITÉ IONIQUE

(30) Priorität: 04.04.2018 DE 102018107909
(43) Veröffentlichungstag der Anmeldung: 17.02.2021
(73) Patentinhaber: Gottfried Wilhelm Leibniz Universität Hannover, 30167 Hannover (DE)
(72) Erfinder: ZIMMERMANN, Stefan, 30938 Burgwedel (DE); KIRK, Ansgar, 30419 Hannover (DE); LIPPMANN, Martin, 30169 Hannover (DE); BOHNHORST, Alexander, 30449 Hannover (DE)
(74) Vertreter: Kröncke, Rolf
(86) Internationale Anmeldenummer: PCT/EP2019/058400
(87) Internationale Veröffentlichungsnummer: WO 2019/193048

(56) Entgegenhaltungen:
- DE-A1- 3 718 244
- DE-T5- 112010 000 010
- US-A- 5 200 614
- US-A1- 2008 179 515
- Z�HLKE M ET AL: "An alternative field switching ion gate for ESI-ion mobility spectrometry", INTERNATIONAL JOURNAL FOR ION MOBILITY SPECTROMETRY, SPRINGER, DE, vol. 20, no. 3, 17 September 2017 (2017-09-17), pages 67 - 73, XP036368210, ISSN: 1435-6163, [retrieved on 20170917], DOI: 10.1007/S12127-017-0222-Y
- ANSGAR T. KIRK: "Bradbury-Nielsen vs. Field switching shutters for high resolution drift tube ion mobility spectrometers", INTERNATIONAL JOURNAL FOR ION MOBILITY SPECTROMETRY, vol. 17, no. 3-4, 17 May 2014 (2014-05-17), DE, pages 131 - 137, XP0093158772, ISSN: 1435-6163, Retrieved from the Internet <URL:http://link.springer.com/article/10.1007/s12127-014-0153-9/fulltext.html> [retrieved on 20240502], DOI: 10.1007/s12127-014-0153-9

## Beschreibung

Die Erfindung betrifft allgemein das Gebiet der lonenmobilitätsspektrometer und Verfahren zur Analyse von Proben durch lonenmobilitätsspektrometrie. Hierbei wird die Abkürzung IMS sowohl für das Messverfahren "Ionenmobilitätsspektrometrie" als auch für die Messeinrichtung "Ionenmobilitätsspektrometer" verwendet.

Die Erfindung betrifft ein lonenmobilitätsspektrometer nach Anspruch 11.

Die Erfindung betrifft außerdem ein Verfahren nach Anspruch 1.

Einrichtungen und Verfahren zur lonenmobilitätsspektrometrie sind beispielsweise aus der DE 10 2015 112 869 A1 oder der EP 2 428 797 A1 bekannt. Aus der DE 11 2010 000 010 T5 ist ein Ionenbeweglichkeitsspektrometer und ein Erfassungsverfahren bekannt. Aus der US 2008/0179515 A1 ist ein lonenmobilitätsspektrometer und ein Verfahren zu dessen Betrieb bekannt. Ein Vergleich von Ionentoren ist bekannt aus der Veröffentlichung von Ansgar T. Kirk et al.: "Bradbury-Nielsen vs. Field switching shutters for high resolution drift tube ion mobility spectrometers", International Journal for Ion Mobility Spectrometry. Ein weiteres lonenmobilitätsspektrometer ist aus der US 5,200,614 bekannt. Dort wird ein Field Switching Ionentor offenbart. Zwischen einer ersten Gegenelektrode und einer ersten Injektionselektrode wird eine feldfreie Ionisationskammer gebildet. Zwischen diesem Ionentor und der ersten Driftkammer ist eine Zusatzelektrode angeordnet.

Der Erfindung liegt die Aufgabe zugrunde, solche lonenmobilitätsspektrometer und Verfahren zur lonenmobilitätsspektrometrie hinsichtlich der praktischen Einsatztauglichkeit zu verbessern.

Diese Aufgabe wird mit den Merkmalen der Ansprüche 1 und 11 gelöst.

Eine Ausgestaltung betrifft ein lonenmobilitätsspektrometer, das wenigstens eine erste Driftkammer und ein erstes schaltbares Ionentor zur gesteuerten Abgabe von Ionen in die erste Driftkammer aufweist, wobei das erste Ionentor als Field Switching Ionentor ausgebildet ist, das wenigstens eine erste Gegenelektrode und eine erste Injektionselektrode aufweist, wobei zwischen der ersten Gegenelektrode und der ersten Injektionselektrode eine erste Ionisationskammer gebildet ist, in die von einer lonisationsquelle durch lonenmobilitätsspektrometrie zu analysierende Ionen zuführbar sind, wobei zwischen dem ersten Ionentor und der ersten Driftkammer wenigstens eine erste Zusatzelektrode angeordnet ist, durch die mittels des ersten Ionentors in die erste Driftkammer abzugebende Ionen zusätzlich beeinflussbar sind. Durch die zusätzlich vorhandene erste Zusatzelektrode, die bei lonenmobilitätsspektrometern mit Field Switching Ionentor sonst nicht vorhanden ist, können mehrere erweiterte Funktionalitäten des lonenmobilitätsspektrometers realisiert werden, durch die das Auflösungsvermögen und die Sensitivität des lonenmobilitätsspektrometers gesteigert werden können. Mittels der ersten Zusatzelektrode kann beispielsweise das nachfolgend noch erläuterte Doppel-Field Switching Verfahren, das Extended-Field Switching Verfahren und eine Kombination daraus, die als Extended-Doppel-Field Switching Verfahren bezeichnet wird, durch Erzeugen entsprechender Potentialgradienten zwischen den Elektroden realisiert werden. Der Realisierungsaufwand für ein derartiges lonenmobilitätsspektrometer ist vergleichsweise gering, insbesondere da ein Field Switching Ionentor eingesetzt werden kann. Hierdurch kann das Ionenmobilitätsspektrometer besonders kompakt bauend und kostengünstig realisiert werden.

Ein Field Switching Ionentor weist eine Gegenelektrode und eine Injektionselektrode auf. Bei Einsatz eines Field Switching Ionentors erfolgt die Ionisierung, das heißt die Bereitstellung von Ionen aus einer Probe, in einem feldfreien oder nahezu feldfreien Raum, der auch als Ionisationskammer bezeichnet wird. Die Ionisationskammer befindet sich zwischen der Gegenelektrode und der Injektionselektrode, wobei die Driftkammer des lonenmobilitätsspektrometers von der Ionisationskammer aus gesehen hinter der Injektionselektrode angeordnet ist. Durch entsprechende Potentialumschaltung der Elektroden des Field Switching Ionentors können in der Ionisationskammer bereit gestellte Ionen als Ionenpaket in die Driftkammer abgegeben werden, wo sie durch ein dort erzeugtes elektrisches Feld entlang der Driftkammer bis zu einem Ionendetektor geführt werden, an dem die Detektion der auftreffenden Ionen erfolgt. Ionenmobilitätsspektrometer solcher Bauart können auch deswegen besonders kompakt bauend und kostengünstig realisiert werden, weil dort beispielsweise keine zusätzliche Reaktionskammer, wie aus DE 10 2015 112 869 A1 bekannt, der Driftkammer vorgeordnet werden muss. Dementsprechend kann das Ionenmobilitätsspektrometer derart ausgebildet sein, dass ein elektrisches Feld in der Ionisationskammer lediglich durch die Elektroden des Field Switching Ionentors erzeugt wird, sodass keine zusätzliche Felderzeugungseinrichtung zur Erzeugung eines elektrischen Felds in der Ionisationskammer erforderlich ist.

Die vorliegende Erfindung beruht auf dem Prinzip des Field Switching zur Zuführung der Ionen von einer jeweiligen Ionisationskammer in eine jeweilige Driftkammer des lonenmobilitätsspektrometers. Der Begriff "Field Switching" oder "Field Switching lonentor" beinhaltet die Funktionalität, dass die Bereitstellung der zu analysierenden Ionen, d.h. die Ionisation der Analyt-Moleküle, in einem feldfreien oder zumindest nahezu feldfreien Ionisationsraum stattfindet, sodass während dieser Ionisationsphase die bereitgestellten Ionen noch nicht aufgrund elektrischer Felder in irgendeiner Richtung bewegt werden. Wenn dann ein Analyseschritt durchgeführt werden soll, werden die Elektroden des Field Switching Ionentors entsprechend umgeschaltet, d.h. es wird zumindest eine Elektrode umgeschaltet, wodurch die Ionen in Richtung der Driftkammer in Bewegung gesetzt werden.

Bei einem Field Switching Ionentor ist somit die Ionisationskammer zumindest während der Ionisationsphase im Wesentlichen frei von elektrischen Feldern. Um diesen Zustand der Feldfreiheit in der Ionisationskammer zu erreichen, kann ein gleiches Potential zwischen der Gegenelektrode und der Injektionselektrode des Field Switching Ionentors vorhanden sein. Es kann auch eine geringfügige Potentialdifferenz zwischen der Gegenelektrode und der Injektionselektrode angelegt werden, um einen Felddurchgriff des elektrischen Felds aus der Driftkammer zu kompensieren. In diesem Fall bewirkt die Potentialdifferenz zwischen der Gegenelektrode und der Injektionselektrode aber gerade nicht die Erzeugung eines elektrischen Felds in der Ionisationskammer, sondern wirkt dem Durchgriff des Feldes der Driftkammer entgegen und kompensiert somit den Zustand in der Ionisationskammer in Richtung eines feldfreien Zustands.

Das lonenmobilitätsspektrometer kann mehrere erste Zusatzelektroden aufweisen. Durch das Vorhandensein mehrerer erster Zusatzelektroden können die beschriebenen, vorteilhaften Verfahrensschritte auch mehrfach durchgeführt werden, z.B. die Kompression des Ionenpakets durch das Doppel-Field Switching kann in diesem Fall als Mehrfach-Field Switching durchgeführt werden.

Gemäß einer vorteilhaften Weiterbildung der Erfindung ist vorgesehen, dass die erste Zusatzelektrode am dem ersten Ionentor zugewandten Ende der ersten Driftkammer angeordnet ist. Auf diese Weise kann das lonenmobilitätsspektrometer hinsichtlich der Baugröße weiter optimiert werden. Zudem kann die erste Zusatzelektrode ihre gewünschte Funktion, z.B. für die Abschirmung des elektrischen Felds in der Driftkammer, besonders effektiv ausüben.

Gemäß Ansprüchen 1 und 11 ist vorgesehen, dass der Abstand zwischen der ersten Zusatzelektrode und der ersten Injektionselektrode geringer ist als der Abstand zwischen der ersten Gegenelektrode und der ersten Injektionselektrode. Auch hierdurch kann die Baugröße des lonenmobilitätsspektrometers sowie die Wirksamkeit der ersten Zusatzelektrode weiter gesteigert werden. Beispielsweise kann hierdurch eine besonders effiziente Kompression des Ionenpakets im nachfolgend noch erläuterten zweiten Kompressionsschritt erfolgen.

Gemäß einer vorteilhaften Weiterbildung der Erfindung ist vorgesehen, dass die erste Zusatzelektrode nicht potentialumschaltbar ausgebildet ist. Hierdurch wird der Aufbau der für den Betrieb des lonenmobilitätsspektrometers erforderlichen Schaltungshardware einfach gehalten und die Abschirmwirkung verbessert. Beispielsweise kann das lonenmobilitätsspektrometer derart ausgebildet sein, dass eine Potentialumschaltung nur an der ersten Injektionselektrode erfolgt.

Eine Ausgestaltung betrifft ein lonenmobilitätsspektrometer, das wenigstens eine erste Driftkammer und ein erstes schaltbares Ionentor zur gesteuerten Abgabe von Ionen in die erste Driftkammer sowie eine von der ersten Driftkammer getrennte zweite Driftkammer und ein zweites schaltbares Ionentor zur gesteuerten Abgabe von Ionen in die zweite Driftkammer aufweist, wobei das erste Ionentor und/oder das zweite Ionentor als Field Switching Ionentor ausgebildet sind. Auf diese Weise kann ein lonenmobilitätsspektrometer mit dualer Polarität realisiert werden, beispielsweise dadurch, dass der die erste Driftkammer aufweisende Teil zur Analyse von positiven Ionen und der die zweite Driftkammer aufweisende Teil zur Analyse von negativen Ionen ausgebildet ist. Durch die Realisierung eines solchen Ionenmobilitätsspektrometers mit einem oder beiden Ionentoren als Field Switching Ionentor kann ein besonders kompakter Aufbau bei zugleich ultrahohem Auflösungsvermögen und extrem hoher Sensitivität bei den Messungen erreicht werden.

Gemäß der Erfindung ist vorgesehen, dass das erste Ionentor wenigstens eine erste Gegenelektrode und eine erste Injektionselektrode aufweist, wobei zwischen der ersten Gegenelektrode und der ersten Injektionselektrode eine erste Ionisationskammer gebildet ist, in die von einer Ionisationsquelle durch lonenmobilitätsspektrometrie zu analysierende Ionen zuführbar sind. **In** diesem Fall ist somit das erste Ionentor als Field Switching Ionentor ausgebildet. Hierbei kann, analog zu den vorherigen Erläuterungen, die erste Injektionselektrode näher an der ersten Driftkammer angeordnet sein als die erste Gegenelektrode.

Gemäß einer vorteilhaften Weiterbildung der Erfindung ist vorgesehen, dass das zweite Ionentor wenigstens eine zweite Gegenelektrode und eine zweite Injektionselektrode aufweist, wobei zwischen der zweiten Gegenelektrode und der zweiten Injektionselektrode eine zweite Ionisationskammer gebildet ist, in die von der Ionisationsquelle durch lonenmobilitätsspektrometrie zu analysierende Ionen zuführbar sind. In diesem Fall ist das zweite Ionentor als Field Switching Ionentor ausgebildet. Hierbei kann die zweite Injektionselektrode näher an der zweiten Driftkammer angeordnet sein als die zweite Gegenelektrode.

Das lonenmobilitätsspektrometer kann an dem der ersten Injektionselektrode abgewandten Ende der ersten Driftkammer einen ersten Detektor zur Detektion einer ersten Ionenspezies, z.B. positive Ionen, aufweisen. Das lonenmobilitätsspektrometer kann an dem der zweiten Injektionselektrode abgewandten Ende der zweiten Driftkammer einen zweiten Detektor aufweisen zur Detektion einer zweiten Ionenspezies, z.B. negative Ionen.

Die zwischen der ersten Gegenelektrode und der ersten Injektionselektrode gebildete erste Ionisationskammer kann mit der zwischen der zweiten Gegenelektrode und der zweiten Injektionselektrode gebildeten zweiten Ionisationskammer verbunden sein oder als gemeinsame Ionisationskammer ausgebildet sein. Unabhängig davon, aber auch in Kombination mit diesen Merkmalen, ist es möglich, das Ionenmobilitätsspektrometer mit einer gemeinsamen Ionisationsquelle auszubilden, durch die Ionen beider Polaritäten in den jeweiligen Ionisationskammern oder der gemeinsamen Ionisationskammer bereitgestellt werden.

Gemäß einer vorteilhaften Weiterbildung der Erfindung ist vorgesehen, dass das erste und das zweite Ionentor aus einer Anordnung von wenigstens einer ersten und einer zweiten Mehrfunktionselektrode gebildet wird, wobei die erste Mehrfunktionselektrode der ersten Driftkammer vorgeordnet ist und die zweite Mehrfunktionselektrode der zweiten Driftkammer vorgeordnet ist, wobei die erste Mehrfunktionselektrode die Injektionselektrode des ersten Ionentors und die zweite Mehrfunktionselektrode die Gegenelektrode des ersten Ionentors bildet, und die zweite Mehrfunktionselektrode die Injektionselektrode des zweiten Ionentors und die erste Mehrfunktionselektrode die Gegenelektrode des zweiten Ionentors bildet. Hierdurch kann ein besonders einfacher Aufbau der Ionentore realisiert werden. Zwischen den Mehrfunktionselektroden kann dann eine gemeinsame Ionisationskammer gebildet sein, die die erste und die zweite Ionisationskammer umfasst.

Bei der zuvor erläuterten Ausführungsform mit den Mehrfunktionselektroden kann auf reine Gegenelektroden, die lediglich die Funktion einer Gegenelektrode ausüben, verzichtet werden. Dementsprechend kann ein einfacherer Aufbau des Ionenmobilitätsspektrometers mit zwei Ionentoren erreicht werden, der weniger Elektroden erfordert. Vorteilhaft ist zudem die gemeinsame Ionisationskammer, die eine höhere Ausbeute an positiven und negativen Ionen ermöglicht. Um die nachfolgend noch erläuterten Verfahren des Extended-Field Switching und des Extended-Doppel-Field Switching durchzuführen, ist es vorteilhaft, jeweils zwei erste und zwei zweite Zusatzelektroden vorzusehen. Die der jeweiligen Driftkammer am nächsten liegende Zusatzelektrode kann dabei auf einem festen Potential gehalten werden, die andere Zusatzelektrode, die näher an der Mehrfunktionselektrode angeordnet ist, kann auf unterschiedliche Potentiale umgeschaltet werden.

Das lonenmobilitätsspektrometer kann derart realisiert sein, dass die erste und die zweite Driftkammer auf gleichen oder zumindest im Wesentlichen parallelen Achsen hintereinander angeordnet sind. Hierdurch ergibt sich eine vergleichsweise große Baulänge des lonenmobilitätsspektrometers bei geringem Durchmesser.

Gemäß einer vorteilhaften Weiterbildung der Erfindung ist vorgesehen, dass die erste und die zweite Driftkammer im Wesentlichen parallel nebeneinander angeordnet sind. Hierdurch kann die Baugröße des lonenmobilitätsspektrometers weiter verringert werden. Insbesondere wird die Baulänge gegenüber der zuvor erläuterten Ausführungsform im Wesentlichen halbiert. Bei dieser Bauform kann die Anordnung der Elektroden der jeweiligen Ionentore vertauscht sein, d.h. in diesem Fall kann die erste Gegenelektrode näher an der ersten Driftkammer angeordnet sein als die erste Injektionselektrode, und die zweite Gegenelektrode kann näher an der zweiten Driftkammer angeordnet sein als die zweite Injektionselektrode.

Gemäß einer vorteilhaften Weiterbildung der Erfindung ist vorgesehen, dass die erste und die zweite Gegenelektrode miteinander kurzgeschlossen sind oder als gemeinsame Gegenelektrode ausgebildet sind. Hierdurch kann der Aufbau des Ionenmobilitätsspektrometers weiter optimiert werden, sowohl hinsichtlich der Baugröße als auch hinsichtlich der erforderlichen Komponenten. Zudem kann der elektrische Aufbau weiter vereinfacht werden. Diese Ausführungsform eignet sich z.B. für ein lonenmobilitätsspektrometer, bei dem die erste und die zweite Driftkammer auf gleichen oder zumindest im Wesentlichen parallelen Achsen hintereinander angeordnet sind. Alternativ kann auch vorgesehen sein, dass die erste und die zweite Injektionselektrode miteinander kurzgeschlossen sind oder als gemeinsame Injektionselektrode ausgebildet sind. Dies ist z.B. vorteilhaft, wenn die erste und die zweite Driftkammer im Wesentlichen parallel nebeneinander angeordnet sind.

Gemäß einer vorteilhaften Weiterbildung der Erfindung ist vorgesehen, dass
a) zwischen dem ersten Ionentor und der ersten Driftkammer wenigstens eine erste Zusatzelektrode angeordnet ist, durch die mittels des ersten Ionentors in die erste Driftkammer abzugebende Ionen zusätzlich beeinflussbar sind
   und/oder
b) zwischen dem zweiten Ionentor und der zweiten Driftkammer wenigstens eine zweite Zusatzelektrode angeordnet ist, durch die mittels des zweiten Ionentors in die zweiten Driftkammer abzugebende Ionen zusätzlich beeinflussbar sind.

Es können somit eine oder mehrere erste Zusatzelektroden vorhanden sein und/oder eine oder mehrere zweite Zusatzelektroden. Die Anzahl der jeweils vorhandenen ersten und zweiten Zusatzelektroden kann unterschiedlich sein, d.h. das Ionenmobilitätsspektrometer kann hinsichtlich der Zusatzelektroden-Bestückung der einzelnen IMS-Röhren auch unsymmetrisch ausgebildet sein.

Gemäß einer vorteilhaften Weiterbildung der Erfindung ist vorgesehen, dass die erste Zusatzelektrode und/oder die zweite Zusatzelektrode potentialumschaltbar ausgebildet ist. Dies ist insbesondere vorteilhaft, wenn das Extended-Field Switching durchgeführt werden soll. Hierdurch kann das Potential der jeweiligen Zusatzelektrode angepasst werden, wenn das Detektorpotential oder der Gradient in der Driftkammer im Rahmen des Extended-Field Switching angepasst wird.

Gemäß einer vorteilhaften Weiterbildung der Erfindung ist vorgesehen, dass das lonenmobilitätsspektrometer als Ionisationsquelle eine Röntgenionisationsquelle, eine Ultraviolett (UV)-Ionisationsquelle, eine Koronaionisationsquelle, eine Plasmaionisationsquelle, eine dielektrisch behinderte Entladungsquelle und/oder einen Elektronenstrahler aufweist. Auf diese Weise kann die erwähnte hohe Sensitivität und das Auflösungsvermögen, insbesondere in Verbindung mit einem Field Switching Ionentor, weiter gefördert werden.

Die Ionisationsquelle kann beispielsweise seitlich neben der jeweiligen Ionisationskammer angeordnet sein. In diesem Fall ist es vorteilhaft, eine Ionisationsquelle mit großer Eindringtiefe oder zumindest großem Öffnungswinkel einzusetzen. Es ist auch möglich, die Ionisationsquelle mit der Gegenelektrode (erste und/ oder zweite Gegenelektrode) zu kombinieren, z.B. durch bauliche Integration der Ionisationsquelle in die Gegenelektrode oder Ausbildung der Gegenelektrode als Ionisationsquelle.

Die Ionisationsquelle kann eine nicht-radioaktive Ionisationsquelle oder eine radioaktive Ionisationsquelle sein. Beispielsweise kann die Gegenelektrode mit einem radioaktiven Material beschichtet sein.

Soweit allgemeine Ausführungen zu einem Field Switching Ionentor und dessen Gegenelektrode und Injektionselektrode gemacht werden, gilt dies sowohl für das erste Ionentor als auch für das zweite Ionentor, das heißt ebenfalls für die erste und die zweite Gegenelektrode und die erste und die zweite Injektionselektrode. Die zuvor erläuterten Ausführungsformen des lonenmobilitätsspektrometers mit der ersten Zusatzelektrode sind sowohl bei einem lonenmobilitätsspektrometer mit einfacher Polarität (mit nur einer Driftkammer) als auch bei der beschriebenen Ausführungsform mit der ersten und der zweiten Driftkammer vorteilhaft kombinierbar. Im letztgenannten Fall kann der zweiten Driftkammer dann eine zweite Zusatzelektrode vorgeschaltet sein.

Eine Ausgestaltung betrifft ein Verfahren zur Analyse von Proben durch Ionenmobilitätsspektrometrie mittels eines lonenmobilitätsspektrometers der zuvor erläuterten Art, wobei mittels einer Ionisationsquelle aus der Probe zu analysierende Ionen erzeugt und in der ersten Ionisationskammer bereitgestellt werden, und die dabei erzeugten Ionen, gesteuert durch das erste Ionentor, durch die erste Driftkammer zu einem ersten Ionendetektor geführt werden, wobei die erste Ionisationskammer zumindest während eines Ionenerzeugungszeitraums im Wesentlichen frei von elektrischen Feldern ist, gekennzeichnet durch eines oder beide der folgenden Merkmale a), b):
a) ein in der ersten Ionisationskammer bereitgestelltes Ionenpaket wird in einem ersten Kompressionsschritt durch Umschalten der Potentialdifferenz zwischen der ersten Injektionselektrode und der ersten Gegenelektrode ein erstes Mal komprimiert und nach Passieren der ersten Injektionselektrode in einem zweiten Kompressionsschritt durch Umschalten der Potentialdifferenz zwischen der ersten Zusatzelektrode und der ersten Injektionselektrode wenigstens ein zweites Mal komprimiert wird, bevor das Ionenpaket in die erste Driftkammer abgegeben wird,
b) in der ersten Ionisationskammer erzeugte Ionen werden zumindest während des Ionenerzeugungszeitraums durch die erste Zusatzelektrode, deren Abstand von der ersten Injektionselektrode geringer ist als der Abstand zwischen der ersten Gegenelektrode und der ersten Injektionselektrode, von Anteilen eines in der ersten Driftkammer erzeugten elektrischen Felds im Wesentlichen abgeschirmt.

Auf diese Weise können vorteilhafte Verfahren des Doppel-Field Switching oder Mehrfach-Field Switching (Merkmal a)), des Extended-Field Switching (Merkmal b)) oder kombiniert daraus des Extended-Doppel-Field Switching (Kombination der Merkmale a) und b)) realisiert werden. Durch diese Verfahren kann das Auflösungsvermögen eines lonenmobilitätsspektrometers gesteigert werden, ohne dass eine sonst erforderliche Verlängerung der Driftkammer notwendig ist. Es ist ebenfalls möglich, lonenmobilitätsspektrometer mit vergleichbarem Auflösungsvermögen kompakter zu bauen, das heißt mit einer kürzeren Driftkammer.

Durch die Ionisation mittels der Ionisationsquelle werden zu analysierende Ionen in der ersten Ionisationskammer bereitgestellt. Diese bereitgestellten Ionen werden auch als Ionenpaket bezeichnet. Durch das Umschalten des Ionentors, das heißt beispielsweise der Elektroden eines Field Switching Ionentors, werden die Ionen des Ionenpakets in Richtung der Driftkammer bewegt und dabei ein erstes Mal komprimiert. Der Begriff des Komprimierens bezieht sich dabei auf die Ausdehnung des Ionenpakets in der gewünschten Flugrichtung, das heißt, in der Driftrichtung durch die Driftkammer. Durch das Komprimieren des Ionenpakets wird dieses schmaler, was zu einer Erhöhung des Auflösungsvermögens der lonenmobilitätsspektrometrie führt. Durch Nutzung der ersten Zusatzelektrode in dem zweiten Kompressionsschritt zum weiteren (zweiten) Komprimieren des Ionenpakets kann dieses bei Übergabe in die Driftkammer noch schmaler gemacht werden als bei Ionenmobilitätsspektrometrie-Verfahren aus dem Stand der Technik. Dem zweiten Kompressionsschritt können eine oder mehrere weitere Kompressionsschritte folgen (Mehrfach-Field Switching), um das Ionenpaket noch schmaler zu machen. In vielen Fällen wird aber für die praktische Anwendung der zweite Kompressionsschritt ausreichend sein.

Der erste Kompressionsschritt kann durch Erzeugen eines elektrischen Felds in der Ionisationskammer mittels des Ionentors erfolgen, das heißt durch Erzeugen einer Potentialdifferenz zwischen der Injektionselektrode und der Gegenelektrode. Der zweite Kompressionsschritt kann durch Erzeugen eines weiteren elektrischen Felds zwischen der Ionisationskammer und der Driftkammer erfolgen. Hierfür kann beispielsweise eine Potentialdifferenz zwischen der Injektionselektrode und der Zusatzelektrode erzeugt werden.

Bei lonenmobilitätsspektrometern der zuvor erläuterten Art, insbesondere bei Einsatz eines Field Switching Ionentors, kann es zu einem Felddurchgriff des in der Driftkammer vorhandenen elektrischen Felds in die Ionisationskammer kommen, insbesondere wenn die Injektionselektrode sehr nah an der Driftkammer angeordnet ist, was zur Erreichung einer geringen Baugröße natürlich erwünscht ist. Ionen im Einflussbereich des Felddurchgriffs können unter Umständen schon in die Driftkammer eintreten, woraus sich eine gewisse Durchlässigkeit des Ionentors auch im geschlossenen Zustand ergibt. Hierdurch kann es zu geringen Leckströmen in die Driftkammer kommen, was zu einer wesentlichen Reduzierung der Sensitivität und Selektivität des lonenmobilitätsspektrometers führen kann. Um diesem Effekt entgegen zu wirken, ist es denkbar, in der Ionisationskammer ein sehr geringes, dem Feld der Driftkammer entgegengesetztes elektrisches Feld zu erzeugen, z.B. indem an der Gegenelektrode eine sogenannte Blockspannung angelegt wird. Dies führt allerdings dazu, dass die Ionen in der Ionisationskammer in Richtung der Gegenelektrode bewegt werden, was zwar ein Durchtreten der Ionen durch das geschlossene Ionentor in gewissem Maße verhindert, aber zu Ionenverlusten an der Gegenelektrode führt. Auch hierdurch wird die Sensitivität des lonenmobilitätsspektrometers verringert. Zudem kann eine zusätzliche Diskriminierung bestimmter Ionenspezies auftreten. Dies kann durch das erfindungsgemäße Extended-Field Switching Verfahren verhindert werden, und zwar durch das Abschirmen der in der Ionisationskammer erzeugten Ionen durch die erste Zusatzelektrode oder wenigstens eine zusätzliche Abschirmelektrode. Die erste Zusatzelektrode bzw. die Abschirmelektrode ist dann, von der Ionisationskammer aus betrachtet, hinter der ersten Injektionselektrode angeordnet. Auf diese Weise kann die Ionisationskammer weiterhin im Wesentlichen frei von einem elektrischen Feld betrieben werden, solange das Ionentor geschlossen ist. Dennoch wird das unerwünschte Durchtreten von Ionen durch das geschlossene Ionentor verhindert, da der Bereich des Felddurchgriffs von der Ionisationskammer abgeschirmt wird. Hierdurch kann somit auf einfache Weise die Sensitivität und Selektivität des lonenmobilitätsspektrometers erhöht werden und die unerwünschte Diskriminierung bestimmter Ionenspezies vermieden werden.

Die eingangs genannte Aufgabe wird außerdem gelöst durch ein Verfahren zur Analyse von Proben durch lonenmobilitätsspektrometrie, wobei mittels einer Ionisationsquelle aus der Probe zu analysierende Ionen erzeugt und in einer ersten und/oder zweiten Ionisationskammer bereitgestellt werden, und die dabei erzeugten positiven und negativen Ionen, gesteuert durch ein jeweiliges erstes und zweites Ionentor, durch separate Driftkammern zu jeweiligen separaten Ionendetektoren geführt werden, wobei die erste und/oder zweite Ionisationskammer zumindest während eines Ionenerzeugungszeitraums im Wesentlichen frei von elektrischen Feldern ist. Auch hierdurch können die mit einem Field Switching Ionentor verbundenen Vorteile realisiert werden.

Die bereits erläuterten Verfahren können bei jeder Ausführungsform des zuvor erläuterten lonenmobilitätsspektrometers eingesetzt werden.

Gemäß einer vorteilhaften Weiterbildung der Erfindung ist vorgesehen, dass die erste und die zweite Gegenelektrode dasselbe Potential aufweisen. Hierdurch wird der elektrische Schaltungsaufbau zum Ansteuern des Ionentors sowie der Aufbau des Ionentors selbst vereinfacht.

Gemäß einer vorteilhaften Weiterbildung der Erfindung ist vorgesehen, dass das Öffnen und Schließen des ersten und/oder zweiten Ionentors durch Potentialumschaltung der Injektionselektrode und/oder der Gegenelektrode des jeweiligen Ionentors erfolgt. Auch hierdurch wird die elektrische Ansteuerung des Ionentors vereinfacht. Weitere Potentialumschaltungen an anderen Elektroden oder an mehreren Elektroden können vermieden werden.

Gemäß einer vorteilhaften Weiterbildung der Erfindung ist vorgesehen, dass im ersten Kompressionsschritt der Potentialgradient zwischen der ersten Gegenelektrode und der ersten Injektionselektrode größer ist als der Potentialgradient in der Driftkammer. Hierdurch kann eine effiziente Kompression des Ionenpakets im ersten Kompressionsschritt erreicht werden.

Gemäß einer vorteilhaften Weiterbildung der Erfindung ist vorgesehen, dass im zweiten Kompressionsschritt der Potentialgradient zwischen der ersten Injektionselektrode und der ersten Zusatzelektrode größer ist als der Potentialgradient in der Driftkammer. Hierdurch kann eine effiziente Kompression des Ionenpakets im zweiten Kompressionsschritt erreicht werden.

Gemäß einer vorteilhaften Weiterbildung der Erfindung ist vorgesehen, dass der Potentialgradient zwischen der ersten Injektionselektrode und der ersten Zusatzelektrode im zweiten Kompressionsschritt größer ist als im ersten Kompressionsschritt. Hierdurch kann eine besonders starke Kompression des Ionenpakets im zweiten Kompressionsschritt erreicht werden.

Gemäß einer vorteilhaften Weiterbildung der Erfindung ist vorgesehen, dass im ersten Kompressionsschritt der Potentialgradient zwischen der ersten Injektionselektrode und der ersten Zusatzelektrode im Wesentlichen gleich dem Potentialgradienten der Driftkammer ist. Auf diese Weise kann ein gleichmäßiger Übergang des Ionenpakets vom Ionentor in die Driftkammer realisiert werden.

Gemäß einer vorteilhaften Weiterbildung der Erfindung ist vorgesehen, dass im ersten Kompressionsschritt der Potentialgradient zwischen der ersten Injektionselektrode und der ersten Zusatzelektrode größer als der Potentialgradient zwischen der ersten Gegenelektrode und der ersten Injektionselektrode und größer als der Potentialgradient der ersten Driftkammer ist. Auf diese Weise kann vorteilhaft eine Ionenfokussierung erreicht werden, die z.B. beim Extended-Field Switching genutzt werden kann.

Gemäß einer vorteilhaften Weiterbildung der Erfindung ist vorgesehen, dass der Potentialgradient zwischen der ersten Injektionselektrode und der zum Abschirmen eingesetzten Elektrode, d.h. der ersten Zusatzelektrode oder der Abschirmelektrode, zumindest während des Ionenerzeugungszeitraums gleich Null oder entgegengesetzt zum Potentialgradienten in der Driftkammer ist. Hierdurch kann eine gute Abschirmwirkung beim Extended-Field Switching realisiert werden, ohne dass es zu nennenswerten Ionenverlusten kommt.

Gemäß einer vorteilhaften Weiterbildung der Erfindung ist vorgesehen, dass beim Schalten in den ersten Kompressionsschritt der Potentialgradient zwischen der ersten Injektionselektrode und der ersten Zusatzelektrode später als der Potentialgradient zwischen der ersten Gegenelektrode und der ersten Injektionselektrode geschaltet wird. Auf diese Weise lassen sich unerwünschte schnelle Ionen eliminieren.

Gemäß einer vorteilhaften Weiterbildung der Erfindung ist vorgesehen, dass beim Verlassen des ersten Kompressionsschritts, d.h. zum Beispiel beim Wechsel in den zweiten Kompressionsschritt, der Potentialgradient zwischen der ersten Gegenelektrode und der ersten Injektionselektrode früher als der Potentialgradient zwischen der ersten Injektionselektrode und der ersten Zusatzelektrode geschaltet wird. Auf diese Weise lassen sich unerwünschte langsame Ionen eliminieren.

Als Potentialgradient wird dabei der Gradient des Potentials in Richtung der Längsachse der Driftkammer bzw. in der gewünschten Driftrichtung der Ionen in der Driftkammer verstanden.

Im Falle eines lonenmobilitätsspektrometers mit einer zweiten Driftkammer, z.B. bei dualer Polarität, gelten die zuvor bezüglich des ersten Ionentors, der ersten Gegenelektrode, der ersten Injektionselektrode, der ersten Zusatzelektrode und der ersten Driftkammer genannten Merkmale auch als vorteilhafte Weiterbildungen der entsprechenden Komponenten des zweiten Ionentors, das heißt der zweiten Gegenelektrode, der zweiten Injektionselektrode und der zweiten Zusatzelektrode, und/oder der zweiten Driftkammer.

Die Erfindung wird nachfolgend anhand von Ausführungsbeispielen unter Verwendung von Zeichnungen näher erläutert.

Es zeigen
- Figur 1: ein lonenmobilitätsspektrometer mit zwei Driftkammern und
- Figur 2: eine weitere Ausführungsform eines lonenmobilitätsspektrometers mit zwei Driftkammern und
- Figur 3: ein lonenmobilitätsspektrometer mit einer Driftkammer und
- Figur 4: einen beispielhaften Potentialverlauf im lonenmobilitätsspektrometer gemäß Figur 3 beim Doppel-Field Switching und
- Figur 5: einen beispielhaften Potentialverlauf im lonenmobilitätsspektrometer gemäß Figur 3 beim Extended-Field Switching und
- Figur 6: einen beispielhaften Potentialverlauf im lonenmobilitätsspektrometer gemäß Figur 3 bei einem Extended-Doppel-Field Switching und
- Figur 7: eine weitere Ausführungsform eines Ionenspektrometers mit zwei Driftkammern und
- Figur 8: eine weitere Ausführungsform eines lonenmobilitätsspektrometers mit zwei Driftkammern und
- Figur 9: einen beispielhaften Potentialverlauf im lonenmobilitätsspektrometer gemäß Figur 8 bei einem normalen oder Doppel-Field Switching und
- Figur 10: eine Ausführungsform eines lonenmobilitätsspektrometers mit zwei Driftkammern und zwei Mehrfunktionselektroden und
- Figuren 11, 12: beispielhafte Potentialverläufe im lonenmobilitätsspektrometer gemäß Figur 10 und
- Figur 13: ein lonenmobilitätsspektrometer mit zwei Driftkammern und
- Figuren 14, 15: beispielhafte Potentialverläufe im lonenmobilitätsspektrometer gemäß Figur 13 bei einem Extended-Field Switching und
- Figur 16: ein lonenmobilitätsspektrometer mit zwei Driftkammern in Ausführung und
- Figur 17: einen beispielhaften Potentialverlauf im lonenmobilitätsspektrometer gemäß Figur 16 und
- Figur 18: ein lonenmobilitätsspektrometer mit zwei Driftkammern in paralleler Anordnung und
- Figuren 19 bis 22: beispielhafte Potentialverläufe im lonenmobilitätsspektrometer gemäß Figur 18 und
- Figur 23: eine weitere Ausführungsform eines lonenmobilitätsspektrometers mit zwei Driftkammern in paralleler Anordnung und
- Figuren 24 bis 27: beispielhafte Potentialverläufe im lonenmobilitätsspektrometer gemäß Figur 23 und
- Figur 28: eine weitere Ausführungsform eines lonenmobilitätsspektrometers mit zwei Driftkammern in paralleler Anordnung und
- Figuren 29 bis 32: beispielhafte Potentialverläufe im lonenmobilitätsspektrometer gemäß Figur 28.

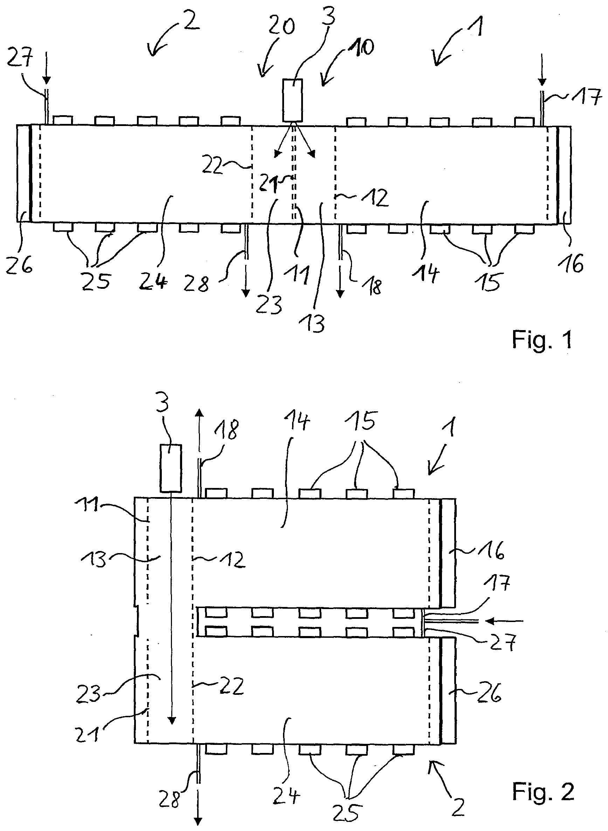

Die Figur 1 zeigt einen lonenmobilitätsspektrometer 1, 2 mit einer im Wesentlichen koaxialen Anordnung zweier IMS-Röhren 1, 2. Die IMS-Röhre 1 weist ein erstes lonentor 10 auf, das eine erste Gegenelektrode 11 und eine erste Injektionselektrode 12 aufweist. Zwischen der ersten Injektionselektrode 12 und der ersten Gegenelektrode 11 ist eine erste Ionisationskammer 13 gebildet. An die erste Ionisationskammer 13 schließt sich hinter der ersten Injektionselektrode 12 eine erste Driftkammer 14 an, die an einem ersten Ionendetektor 16 endet. Im Bereich der ersten Driftkammer 14 ist eine erste Felderzeugungseinrichtung 15 vorhanden, z.B. in Form von die erste Driftkammer 14 umgebenden Ringelektroden. Mit der ersten Felderzeugungseinrichtung 15 kann ein elektrisches Feld in der ersten Driftkammer 14 erzeugt werden, das die gewünschte Driftwirkung auf die zu untersuchenden Ionen ausübt, so dass diese vom ersten Ionentor 10 zum ersten Ionendetektor 16 transportiert werden. Die erste Driftkammer 14 kann durch ein Driftgas durchströmt werden, z.B. in entgegengesetzter Richtung zur Driftrichtung der Ionen. Hierzu weist die erste IMS-Röhre 1 einen ersten Driftgas-Einlassanschluss 17 und einen ersten Driftgas-Auslassanschluss 18 auf. Am ersten Driftgas-Einlassanschluss 17 kann das Driftgas in die IMS-Röhre 1 eingeleitet werden. Am ersten Driftgas-Auslassanschluss 18 kann das Driftgas aus der IMS-Röhre 1 abgeführt werden.

Das lonenmobilitätsspektrometer bzw. die erste und die zweite IMS-Röhre 1, 2 können zusätzliche Anschlüsse für die Einleitung und Abführung eines Probengases aufweisen. Diese Anschlüsse können beispielsweise im Bereich der ersten Ionisationskammer 13 und/oder der zweiten Ionisationskammer 23 angeordnet sein.

Die zweite IMS-Röhre 2 ist vergleichbar aufgebaut wie die erste IMS-Röhre 1, jedoch spiegelsymmetrisch dazu angeordnet. Die zweite IMS-Röhre 2 weist ein zweites lonentor 20 mit einer zweiten Gegenelektrode 21 und einer zweiten Injektionselektrode 22 auf, wobei zwischen der zweiten Injektionselektrode 22 und der zweiten Gegenelektrode 21 eine zweite Ionisationskammer 23 gebildet ist. Weitere Komponenten der zweiten IMS-Röhre 2 sind eine zweite Driftkammer 24, eine zweite Felderzeugungseinrichtung 25, ein zweiter Ionendetektor 26, ein zweiter Driftgas-Einlassanschluss 27 und ein zweiter Driftgas-Auslassanschluss 28. Die entsprechenden Elemente der zweiten IMS-Röhre 2 weisen die gleiche Funktion auf, wie zuvor für die Komponenten der ersten IMS-Röhre 1 erläutert. Die erste IMS-Röhre 1 kann z.B. für die Analyse positiver Ionen eingesetzt werden, die zweite IMS-Röhre 2 für die Analyse negativer Ionen.

Hierbei können die erste und die zweite Gegenelektrode 11, 21 auch als gemeinsame Gegenelektrode oder als galvanisch miteinander verbundene Gegenelektroden ausgebildet sein.

Das lonenmobilitätsspektrometer weist außerdem eine Ionisationsquelle 3 auf, durch die Ionen in der ersten und der zweiten Ionisationskammer 13, 23 bereitgestellt werden. Das erste und das zweite Ionentor 10, 20 sind jeweils als Field Switching Ionentor ausgebildet.

Die Figur 2 zeigt eine vorteilhafte Ausführungsform eines lonenmobilitätsspektrometers, das ebenfalls eine erste und eine zweite IMS-Röhre 1, 2 aufweist, und im Übrigen die anhand der Figur 1 bereits erläuterten Komponenten beinhaltet. Im Unterschied zur Ausführung der Figur 1 sind bei der Figur 2 die IMS-Röhren 1, 2 im Wesentlichen parallel nebeneinander angeordnet, sodass sich eine geringere Baulänge der Anordnung ergibt. Hierbei kann eine gemeinsame Ionisationskammer aus der ersten Ionisationskammer 13 und einer zweiten Ionisationskammer 23 gebildet sein, die wie bei der Ausführungsform der Figur 1 von einer gemeinsamen Ionisationsquelle 3 mit Ionen versorgt wird.

Bei der Ausführungsform gemäß Figur 2 können das erste und das zweite Ionentor 10, 20 jeweils gleichartig wie bei der Ausführungsform der Figur 1 aufgebaut sein, d.h. derart, dass die jeweilige Injektionselektrode näher an der dem Ionentor zugeordneten Driftkammer angeordnet ist als die jeweilige Gegenelektrode. Die Figur 2 zeigt diesbezüglich eine geänderte Anordnung, bei der die Positionen der Injektionselektrode und der Gegenelektrode eines jeweiligen Ionentors 10, 20 vertauscht sind.

Erkennbar ist, dass die erste Injektionselektrode 12 weiter von der ersten Driftkammer 14 entfernt ist und die erste Gegenelektrode 11 näher an der ersten Driftkammer 14 angeordnet ist. In vergleichbarer Weise ist die zweite Injektionselektrode 22 weiter von der zweiten Driftkammer 24 entfernt, die zweite Gegenelektrode 21 ist näher an der zweiten Driftkammer 24. Dies ermöglicht es, die erste und die zweite Gegenelektrode 11, 21 als gemeinsame Gegenelektrode oder zumindest als miteinander galvanisch verbundene Gegenelektroden auszubilden. Hierdurch werden der Aufbau des lonenmobilitätsspektrometers und der für den elektrischen Betrieb des Ionenmobilitätsspektrometers erforderliche Schaltungsaufbau vereinfacht.

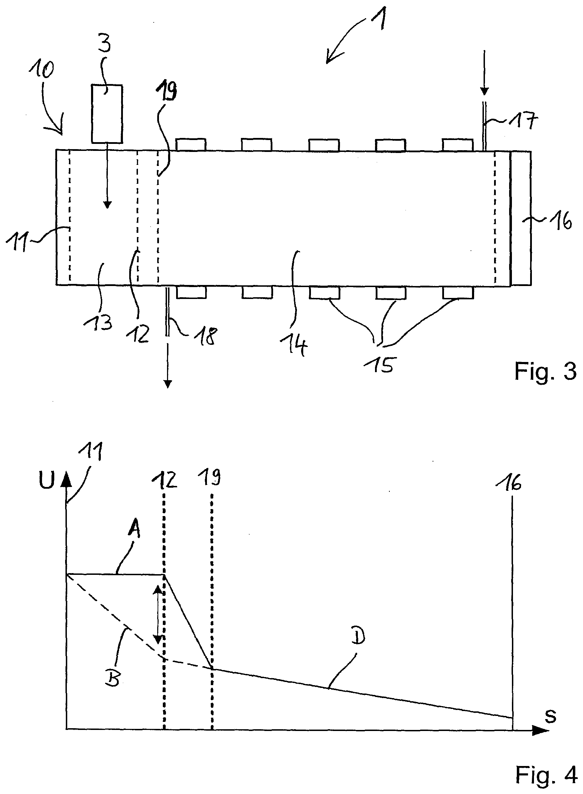

Die Figur 3 zeigt ein lonenmobilitätsspektrometer mit nur einer IMS-Röhre 1. Das lonenmobilitätsspektrometer weist einen vergleichbaren Aufbau wie die erste IMS-Röhre 1 der Ausführungsform der Figur 1 auf, und zwar mit den Komponenten erstes Ionentor 10, das die erste Gegenelektrode 11 und die erste Injektionselektrode 12 aufweist, zwischen denen die erste Ionisationskammer 13 gebildet ist, sowie die sich an das erste Ionentor 10 anschließende erste Driftkammer 14, in dessen Bereich die erste Felderzeugungseinrichtung 15 angeordnet ist. Am Ende der ersten Driftkammer 14 ist der erste Ionendetektor 16 angeordnet. Ferner sind der erste Driftgas-Einlassanschluss 17 und der erste Driftgas-Auslassanschluss 18 vorhanden.

Als zusätzliches Element weist das lonenmobilitätsspektrometer gemäß Figur 3 eine Zusatzelektrode 19 auf, die von der ersten Gegenelektrode 11 aus betrachtet hinter der ersten Injektionselektrode 12 angeordnet ist, z.B. am Anfang der ersten Driftkammer 14. Die erste Zusatzelektrode 19 kann ähnlich ausgebildet sein wie die erste Injektionselektrode 12 oder die erste Gegenelektrode 11, z.B. als Ringelektrode oder als Gitterelektrode. Durch Anlegen eines geeigneten elektrischen Potentials an der ersten Zusatzelektrode 19 sowie durch Umschalten wenigstens eines anderen Potentials des ersten Ionentors 10, z.B. des Potentials an der ersten Injektionselektrode 12, können Verfahren zum Doppel-Field Switching, zum Extended-Field Switching und zum Extended-Doppel-Field Switching realisiert werden. Dies wird nachfolgend anhand der Zeitdiagramme der Figuren 4 bis 6 erläutert.

In den Figuren 4 bis 6 ist eine elektrische Potentialdifferenz U über die Längserstreckung s der IMS-Röhre 1 dargestellt. Die Potentialdifferenz U ist die jeweilige die Potentialdifferenz zum ersten Ionendetektor 16. Durch vertikale Linien sind die Positionen der ersten Gegenelektrode 11, der ersten Injektionselektrode 12, der ersten Zusatzelektrode 19 und des ersten Ionendetektors 16 dargestellt. In sämtlichen Beispielen der Figuren 4 bis 6 wird angenommen, dass in der ersten Driftkammer 14 ein linearer Potentialverlauf mit vergleichsweise geringem Potentialgradienten D und dementsprechend geringer Feldstärke des elektrischen Felds vorhanden ist.

Die Figur 4 zeigt ein Beispiel für das Doppel-Field Switching. Hierbei wird das Potential der ersten Injektionselektrode 12 zwischen zwei Werten hin- und hergeschaltet. Durch die durchgezogene Linie A ist der Potentialverlauf dargestellt, bei dem in der ersten Ionisationskammer 13 kein elektrisches Feld vorhanden ist, weil keine Potentialdifferenz zwischen der ersten Gegenelektrode 11 und der ersten Injektionselektrode 12 erzeugt wird. In dieser Phase können in der ersten Ionisationskammer 13 mittels der Ionisationsquelle 3 zu analysierende Ionen erzeugt und bereitgestellt werden. Das erste Ionentor 10 ist in diesem Zustand somit geschlossen.

Wenn eine ausreichende Menge an zu analysierenden Ionen in der ersten Ionisationskammer 13 angesammelt ist, wird das Potential an der ersten Injektionselektrode 12 umgeschaltet, sodass sich der mit der gestrichelten Linie B dargestellte Potentialverlauf einstellt. Das in der ersten Ionisationskammer 13 befindliche Ionenpaket wird nun durch den abfallenden Potentialverlauf aus der ersten Ionisationskammer 13 in Richtung zur ersten Driftkammer 14 bewegt. Dabei erfolgt eine erste Kompression des Ionenpakets. Nach einem bestimmten Zeitraum, wenn angenommen werden kann, dass das Ionenpaket die erste Injektionselektrode 12 passiert hat, aber noch nicht die erste Zusatzelektrode 19 passiert hat, wird das Potential an der ersten Injektionselektrode 12 wieder auf den zuerst vorliegenden Wert umgeschaltet, sodass sich wieder der mit durchgezogener Linie A dargestellte Potentialverlauf ergibt. In diesem Zustand ist, wie erwähnt, die Feldstärke in der ersten Ionisationskammer im Wesentlichen gleich Null. In dem Raum zwischen der ersten Injektionselektrode 12 und der ersten Zusatzelektrode 19 ist dann ein relativ steiler Potentialgradient vorhanden, somit ein relativ starkes elektrisches Feld, durch das eine zweite Kompression des in diesem Zwischenraum befindlichen Ionenpakets erfolgt. Dieses nun zum zweiten Mal komprimierte Ionenpaket wird danach in die erste Driftkammer 14 abgegeben.

Erkennbar ist in der Figur 4 zudem, dass es vorteilhaft sein kann, den zweiten Potentialwert, der an der ersten Injektionselektrode 12 angelegt wird und der zu dem Potentialverlauf gemäß der gestrichelten Linie B führt, derart festzulegen, dass in dieser Betriebsphase der Potentialgradient zwischen der ersten Injektionselektrode 12 und der ersten Zusatzelektrode 19 zumindest im Wesentlichen gleich dem Potentialgradienten D in der ersten Driftkammer 14 ist. Auf diese Weise wird eine homogene Überführung des Ionenpakets von dem Zwischenraum zwischen der ersten Injektionselektrode 12 und der ersten Zusatzelektrode 19 in die erste Driftkammer 14 gewährleistet.

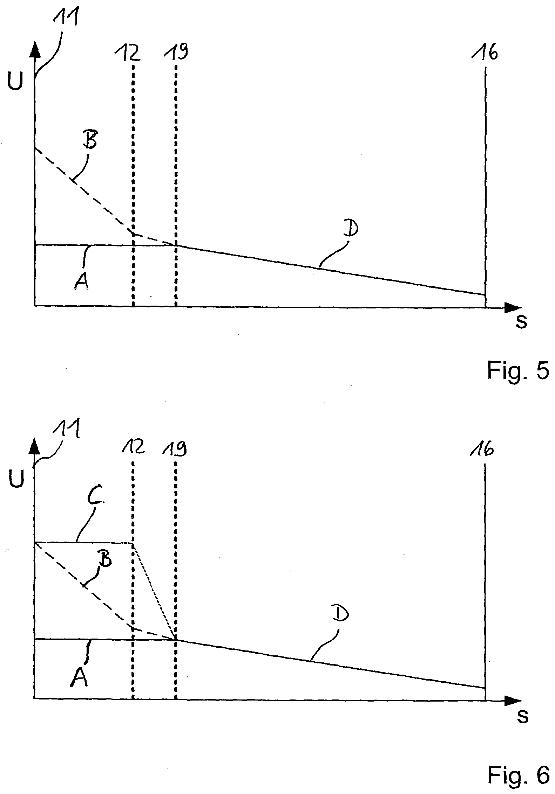

Die Figur 5 zeigt ein Beispiel für ein Extended-Field Switching. Auch hier wird das Potential der ersten Injektionselektrode 12 zwischen zwei verschiedenen Werten hin- und hergeschaltet. Zunächst sei angenommen, dass ein Potentialwert an der ersten Injektionselektrode 12 angelegt ist, der zu dem mit der durchgezogenen Linie A dargestellten Potentialverlauf führt. In diesem Zustand ist das erste Ionentor 10 im geschlossenen Zustand, d.h. die erste Ionisationskammer 13 ist im Wesentlichen feldfrei. Zudem ist das Potential an der ersten Injektionselektrode 12 so gewählt, dass auch im Zwischenraum zwischen der ersten Injektionselektrode 12 und der ersten Zusatzelektrode 19 das Potential konstant ist und somit dieser Raum auch im Wesentlichen feldfrei ist. Auf diese Weise kann ein Felddurchgriff, der sich aus dem Potentialgradienten D in der ersten Driftkammer 14 ergibt, in die erste Ionisationskammer 13 verhindert werden.

Es wird dann das Potential an der ersten Injektionselektrode 12 auf einen anderen Wert geschaltet, sodass sich der durch die gestrichelte Linie B wiedergegebene Potentialverlauf einstellt. Der Potentialgradient zwischen der ersten Gegenelektrode 11 und der ersten Injektionselektrode 12 entspricht dabei beispielsweise dem in der Figur 4 durch die gestrichelte Linie B dargestellten Potentialverlauf, ebenso kann der Potentialverlauf zwischen der ersten Injektionselektrode 12 und der ersten Zusatzelektrode 19 dem anhand der Figur 4 mit der gestrichelten Linie B dargestellten Potentialverlauf entsprechen. In diesem Zustand ist das erste Ionentor somit auf Durchlass geschaltet, sodass das Ionenpaket von der ersten Ionisationskammer 13 zur ersten Driftkammer 14 bewegt wird.

Die Figur 6 zeigt beispielhafte Potentialverläufe beim Extended-Doppel-Field Switching, somit einer Kombination aus den zuvor anhand der Figuren 4 und 5 erläuterten Verfahren. Hierbei wird das Potential an der ersten Injektionselektrode 12 zwischen drei verschiedenen Werten umgeschaltet. Es sei angenommen, dass der Ablauf mit dem Potentialverlauf gemäß der durchgezogenen Linie A beginnt. In diesem Zustand ist das erste Ionentor 10 geschlossen, oder anders gesagt, dieser Zustand entspricht dem anhand der Figur 5 zuvor erläuterten Zustand gemäß der dortigen durchgezogenen Linie A. Die erste Ionisationskammer 13 sowie der Zwischenraum zwischen der ersten Injektionselektrode 12 und der ersten Zusatzelektrode 19 sind im Wesentlichen feldfrei. Hierdurch kann die erste Zusatzelektrode 19 ihre Funktion zur Abschirmung des Felddurchgriffs von der ersten Driftkammer 14 ausüben.

Es wird dann das Potential an der ersten Injektionselektrode 12 umgeschaltet, sodass sich der durch die gestrichelte Linie B dargestellte Potentialverlauf ergibt. In diesem Zustand ist das erste Ionentor 10 geöffnet. Das in der ersten Ionisationskammer 13 angesammelte Ionenpaket wird in Richtung zur ersten Driftkammer 14 bewegt und dabei ein erstes Mal komprimiert. Dies entspricht dem Ablauf, der sich bei den zuvor anhand der Figuren 4 und 5 erläuterten Beispielen ebenfalls beim Potentialverlauf gemäß der gestrichelten Linie B ergibt.

Es wird dann das Potential der ersten Injektionselektrode 12 ein weiteres Mal umgeschaltet, sodass sich der durch die gepunktete Linie C dargestellte Potentialverlauf ergibt. **In** diesem Zustand ist das erste Ionentor 10 wiederum geschlossen. Dementsprechend ist die erste Ionisationskammer 13 im Wesentlichen feldfrei. Dieser feldfreie Zustand der ersten Ionisationskammer 13 wird aber, im Gegensatz zum Potentialverlauf, der durch die durchgezogene Linie A dargestellt ist, auf einem höheren Potentialwert erreicht. Dementsprechend ist im Zwischenraum zwischen der ersten Injektionselektrode 12 und der ersten Zusatzelektrode 19 ein vergleichsweise starkes elektrisches Feld vorhanden, d.h. ein deutlicher Potentialgradient, sodass in diesem Zwischenraum befindliche Ionen ein zweites Mal komprimiert werden, bevor sie in die erste Driftkammer 14 abgegeben werden. Der Potentialverlauf gemäß der gepunkteten Linie C kann dabei beispielsweise dem Potentialverlauf gemäß der durchgezogenen Linie A der Figur 4 entsprechen.

Danach wird das Potential an der ersten Injektionselektrode 12 wieder auf den zuerst genannten Wert umgeschaltet, sodass sich der Potentialverlauf gemäß der durchgezogenen Linie A der Figur 6 einstellt.

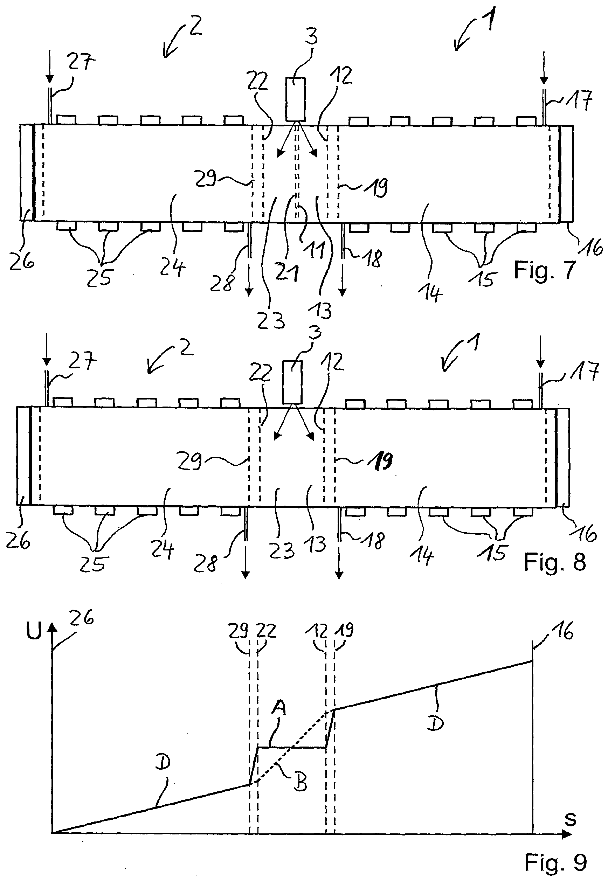

Die Figur 7 zeigt eine weitere Ausführungsform eines lonenmobilitätsspektrometers mit zwei Driftkammern, die hintereinander angeordnet sind, d.h. wie bei der Ausführungsform der Figur 1. Im Unterschied zur Ausführungsform der Figur 1 weist das lonenmobilitätsspektrometer der Figur 7 eine erste Zusatzelektrode 19 in der IMS-Röhre 1 und eine zweite Zusatzelektrode 29 in der IMS-Röhre 2 auf. Hierdurch kann ein lonenmobilitätsspektrometer mit zwei Driftkammern, z.B. ein Ionenmobilitätsspektrometer mit dualer Polarität, bereitgestellt werden, das eine entsprechende Funktionalität zur Durchführung des Doppel-Field Switching, des Extended-Field Switching und des Extended-Doppel-Field Switching aufweist. Hierbei sind die Potentiale an der jeweiligen Injektionselektrode des ersten und des zweiten Ionentors 10, 20 in entsprechender Weise zu schalten, wie zuvor für die Ausführungsform der Figur 3 mit nur einer IMS-Röhre 1 erläutert. Selbstverständlich sind die Potentiale an der ersten und der zweiten Injektionselektrode 12, 22 in entgegengesetzter Weise zu schalten, wenn Ionen mit unterschiedlicher Polarität in den einzelnen IMS-Röhren 1, 2 analysiert werden sollen.

Die Figur 8 zeigt eine weitere Ausführungsform eines lonenmobilitätsspektrometers, das der Ausführungsform der Figur 7 ähnelt. Im Unterschied zur Figur 7 entfallen die erste und die zweite Gegenelektrode 11, 21. Es ist dementsprechend auch eine gemeinsame Ionisationskammer aus der ersten und der zweiten Ionisationskammer 13, 23 gebildet. Hierdurch wird der Aufbau des lonenmobilitätsspektrometers vereinfacht. Zudem können Ionenverluste noch weiter minimiert werden. Dennoch kann die volle Funktionalität eines lonenmobilitätsspektrometers realisiert werden, einschließlich der zuvor erläuterten Erweiterungen des Doppel-Field Switching, des Extended-Field Switching und des Extended-Doppel-Field Switching.

Die Figur 9 zeigt beispielhafte Potentialverläufe des lonenmobilitätsspektrometers gemäß Figur 8, wenn das Doppel-Field Switching realisiert ist. Es ist, analog zu den Darstellungen der Figuren 4 bis 6, wiederum die Potentialdifferenz U über die Längserstreckung s des lonenmobilitätsspektrometers dargestellt. Zudem sind die Positionen des ersten und des zweiten Ionendetektors 16, 26, der ersten und der zweiten Injektionselektrode 12, 22 und der ersten und der zweiten Zusatzelektrode 19, 29 dargestellt. Es wird hierbei jeweils das Potential an der ersten Injektionselektrode 12 und der zweiten Injektionselektrode 22 zwischen zwei verschiedenen Werten hin- und hergeschaltet. Durch den Potentialverlauf mit der durchgezogenen Linie A ist der Zustand bei geschlossenen Ionentoren 10, 20 dargestellt. In der gemeinsamen Ionisationskammer ist somit ein feldfreier Raum vorhanden und es können die Ionen durch die Ionisationsquelle 3 bereitgestellt werden.

Sodann werden die Potentiale an der ersten Injektionselektrode 12 und der zweiten Injektionselektrode 22 in entgegengesetzter Weise umgeschaltet, sodass sich der durch die gestrichelte Linie B dargestellte Potentialverlauf ergibt. Auf diese Weise werden die positiven und negativen Ionen voneinander separiert und als jeweilige separate Ionenpakete in Richtung zur jeweiligen ersten oder zweiten Driftkammer 14, 24 transportiert. Hierbei erfolgt eine erste Kompression des jeweiligen Ionenpakets.

Wenn das jeweilige Ionenpaket die ihm zugeordnete Injektionselektrode 12 bzw. 22 passiert hat, kann der Potentialverlauf wieder auf den Verlauf gemäß der durchgezogenen Linie A umgeschaltet werden. In diesem Zustand ist ein relativ steiler Potentialgradient in den jeweiligen Zwischenräumen erste Injektionselektrode 12/erste Zusatzelektrode 19 und zweite Injektionselektrode 22/zweite Zusatzelektrode 29 vorhanden. Hierdurch erfolgt eine zweite Kompression des jeweiligen Ionenpakets. Der Ablauf entspricht dabei dem bereits anhand der Figur 4 für die eine IMS-Röhre 1 erläuterten Ablauf. Für die zweite IMS-Röhre 2 ergibt sich der gleiche Ablauf, jedoch mit entgegengesetzter Polarität.

Bei einem solchen Ionentor, das eine Injektionselektrode und eine Gegenelektrode aufweist, ist in vielen Anwendungen die Injektionselektrode näher an der dem Ionentor zugeordneten Driftkammer angeordnet als die Gegenelektrode. In manchen Anwendungen, z.B. bei einem lonenmobilitätsspektrometer mit dualer Polarität, kann die Anordnung auch umgekehrt sein, d.h. in solchen Fällen ist die Gegenelektrode näher an der dem Ionentor zugeordneten Driftkammer angeordnet als die Injektionselektrode.

Auch wenn bei der Ausführungsform des lonenmobilitätsspektrometers gemäß Figur 8 keine erste und zweite Gegenelektrode als gesondertes Bauteil vorhanden ist, so ist bei der beschriebenen Funktion des Umschaltens der Potentiale an den Injektionselektroden dennoch die Funktion der jeweiligen Gegenelektroden vorhanden. In Bezug auf die IMS-Röhre 1, der das erste Ionentor 10 zugeordnet ist, übernimmt die zweite Injektionselektrode 22 die Funktion der ersten Gegenelektrode. In entsprechender Weise übernimmt für die zweite IMS-Röhre 2, der das zweite Ionentor 20 zugeordnet ist, die erste Injektionselektrode 12 die Funktion der zweiten Gegenelektrode. Wie man erkennt, haben die erste und die zweite Injektionselektrode 12, 22 bei dieser Ausführungsform die Funktionalität der zuvor erläuterten ersten und zweiten Mehrfunktionselektrode.

Es ist auch möglich, die Potentiale getrennt an der jeweiligen Gegenelektrode und der jeweiligen Injektionselektrode eines Ionentors umzuschalten und mit der Anordnung aus den erwähnten drei Elektroden, d.h. Gegenelektrode, Injektionselektrode und Zusatzelektrode das Verfahren des Doppel-Field Switching, des Extended-Field Switching und/oder des Extended-Doppel-Field Switching durchzuführen.

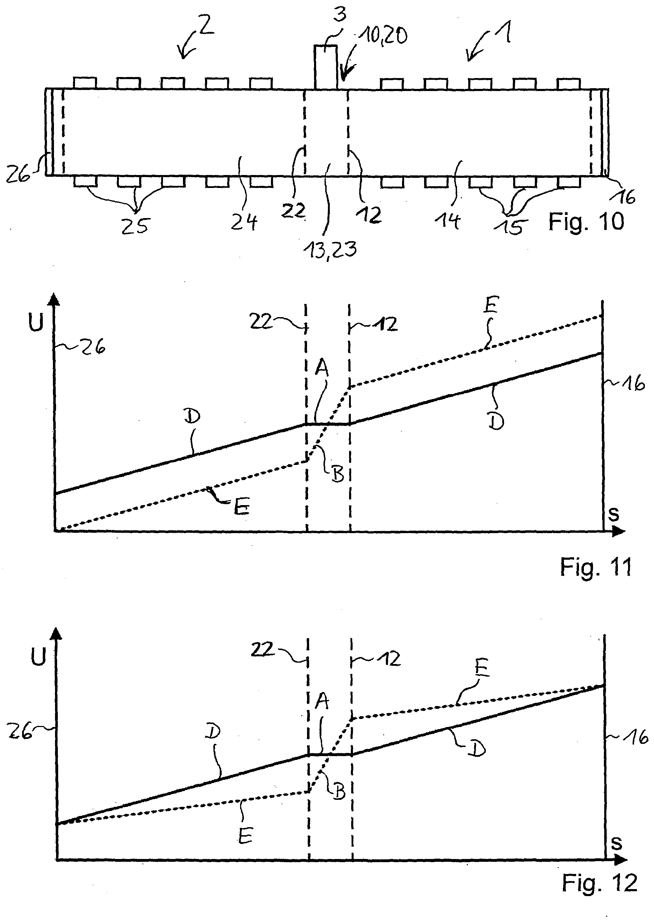

Die Figur 10 zeigt ein lonenmobilitätsspektrometer mit zwei axial fluchtend angeordneten Driftkammern 14, 24, das gegenüber der anhand der Figur 8 erläuterten Ausführungsform noch stärker vereinfacht ist. Die Ausführungsform gemäß Figur 10 weist wiederum die zwei Mehrfunktionselektroden auf, die durch die erste Injektionselektrode 12 und die zweite Injektionselektrode 22 gebildet werden. Im Unterschied zur Ausführungsform der Figur 8 fehlen bei der Ausführungsform der Figur 10 die erste und die zweite Zusatzelektrode 19, 29. Auch mit dieser noch weiter vereinfachten Ausführungsform eines dualen lonenmobilitätsspektrometers lässt sich die gewünschte Funktionalität bei der Ionenanalyse realisieren.

Die Figur 11 zeigt eine Ausführungsform der Potentialverläufe in den Driftkammern 14, 24 und in der gemeinsamen Ionisationskammer 13, 23. Gemäß Figur 11 liegt während des Ionenerzeugungszeitraums im Wesentlichen der gleiche Potentialverlauf vor wie bei der Ausführungsform der Figur 8, jedoch ohne den Potentialgradienten zwischen der jeweiligen Injektionselektrode und der Zusatzelektrode, weil die Zusatzelektroden bei der Ausführungsform der Figur 10 nicht vorhanden sind. Dies wird in der Figur 11 durch die durchgezogenen Linien wiedergegeben. Gemäß dem Prinzip des Field Switching liegt in der gemeinsamen Ionisationskammer 13, 23 der Potentialgradient A vor, durch den die Ionisationskammer 13, 23 im Wesentlichen frei von elektrischen Feldern ist. In der ersten Driftkammer 14 und in der zweiten Driftkammer 24 ist ein Driftfeld mit dem Potentialgradienten D vorhanden. Wird nun nach Ansammlung einer ausreichenden Ionenmenge in der Ionisationskammer 13, 23 die Umschaltung des Field Switching Ionentors durchgeführt, sodass die Ionen in die jeweiligen Driftkammern 14, 24 überführt werden (Ioneninjektionszeitraum), erfolgt dies durch Umschaltung der Potentiale an den Injektionselektroden 12, 22, wie in der Figur 11 durch die punktiert dargestellten Linien wiedergegeben wird. In der Ionisationskammer 13, 23 liegt dann ein vergleichsweise steiler Potentialgradient B vor. In den jeweiligen Driftkammern 14, 24 wird die Potentialhöhe jeweils verändert, wobei der Potentialgradient E, d.h. die jeweilige Steigung des Potentials über den Weg s, gleichbleibt und der Steigung des Potentialgradienten D entspricht. Dies wird dadurch erreicht, dass die Potentiale am jeweiligen Detektor 16, 26 um den gleichen Betrag umgeschaltet werden wie an der jeweiligen Injektionselektrode 12, 22.

Die Figur 12 zeigt eine alternative Ausführungsform des Umschaltens der Potentiale im Vergleich zur Figur 11. Während des Ionenerzeugungszeitraums liegt der gleiche Zustand wie gemäß Figur 11 vor, d.h. ein im Wesentlichen neutraler Potentialgradient A in der gemeinsamen Ionisationskammer 13, 23 und die jeweiligen Potentialgradienten D in den Driftkammern 14, 24. Bei der Umschaltung des Field Switching Ionentors zum Abgeben der Ionen in die jeweiligen Driftkammern 14, 24 erfolgt die gleiche Potentialumschaltung an den Injektionselektroden 12, 22 wie gemäß Figur 11 erläutert, d.h. es wird ein Potentialgradient B in der gemeinsamen Ionisationskammer 13, 23 erzeugt. Im Unterschied zur Figur 11 wird hier aber das Potential an den Detektoren 16, 26 nicht umgeschaltet. Es ergibt sich hierdurch ein jeweiliger Potentialgradient E in den Driftkammern 14, 24, der betragsmäßig geringer ist als der Potentialgradient D, sodass die Bewegungsgeschwindigkeit der Ionen in der jeweiligen Driftkammer 14, 24 im Vergleich zur Variante der Figur 11 zunächst, d.h. während des Ioneninjektionszeitraums geringer ist. Danach kann wieder auf einen höheren Potentialgradienten, z.B. den Potentialgradient D, umgeschaltet werden.

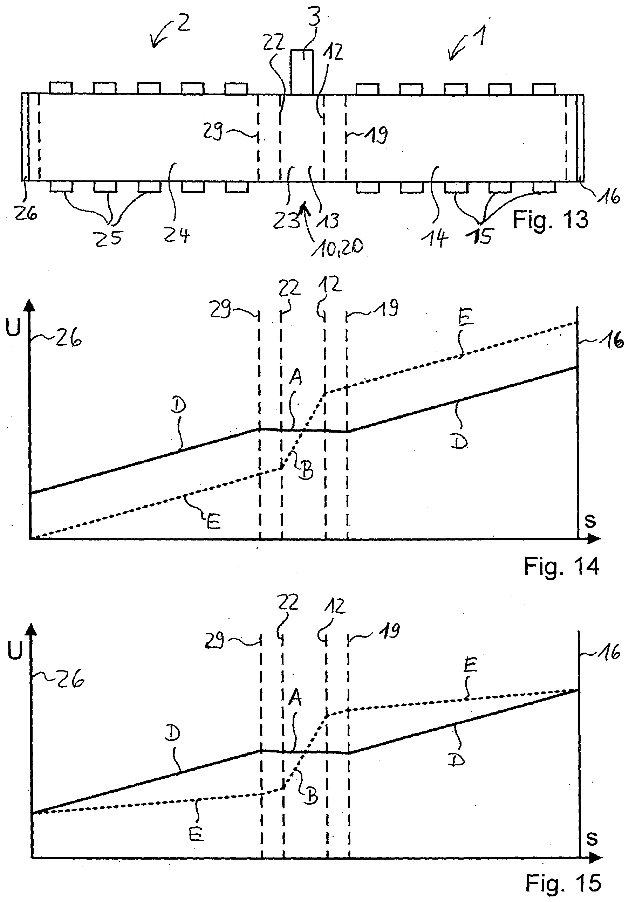

Die zuvor anhand der Ausführungsform des lonenmobilitätsspektrometers gemäß Figur 10 beschriebene Art der Umschaltung der Potentiale kann auch vorteilhaft bei der Ausführungsform des lonenmobilitätsspektrometers gemäß Figur 8 eingesetzt werden. Bei der Ausführungsform gemäß Figur 8 sind zusätzlich zu den durch die Injektionselektroden 12, 22 gebildeten Mehrfunktionselektroden die Zusatzelektroden 19, 29 vorhanden. Hiervon wird auch in der Ausführungsform des Ionenmobilitätsspektrometers gemäß Figur 13 ausgegangen, das vergleichbar ist mit der Ausführungsform der Figur 8. Bei diesem lonenmobilitätsspektrometer kann die Potentialumschaltung gemäß Figur 14 erfolgen. Die Potentialverläufe sowie die Umschaltung zwischen den Potentialgradienten A und B entsprechen dabei der Ausführungsform der Figur 11. Ebenfalls analog zu Figur 11 erfolgt in der jeweiligen Driftkammer 14, 24 eine Parallelverschiebung der Potentialgradienten zwischen dem Ionenerzeugungszeitraum (Potentialgradient D) und dem Ioneninjektionszeitraum (Potentialgradient E), d.h. dem Zeitraum, in dem die Ionen in die jeweilige Driftkammer 14, 24 überführt werden. Die Potentialgradienten D, E verlaufen dabei parallel, was durch eine Umschaltung der Potentiale am jeweiligen Detektor 16, 26 realisiert wird.

Zusätzlich wird in dem Ionenerzeugungszeitraum im jeweiligen Raum zwischen der ersten Injektionselektrode 12 und der ersten Zusatzelektrode 19 bzw. der zweiten Injektionselektrode 22 und der zweiten Zusatzelektrode 29 ein Potentialgradient eingestellt, der weitgehend neutral ist, d.h. im Wesentlichen dem Potentialgradienten A entspricht, dabei aber eine geringfügige Steigung entgegengesetzt zum Potentialgradienten D in der jeweils zugeordneten Driftkammer 14, 24 haben kann. Auf diese Weise kann durch die jeweilige Zusatzelektrode 19, 29 der Durchgriff des Feldes in die gemeinsame Ionisationskammer 13, 23 von der jeweiligen Driftkammer 14, 24 neutralisiert werden.

Das Umschalten der Potentiale kann auch gemäß Figur 15 erfolgen, wobei die Art des Umschaltens der Potentiale im Wesentlichen der Ausführungsform der Figur 12 entspricht. Wie bei Figur 12 werden bei Figur 15 die Potentiale an den Detektoren 16, 26 nicht umgeschaltet, was zu einem Potentialgradienten E führt, der betragsmäßig geringer ist als der Potentialgradient D.

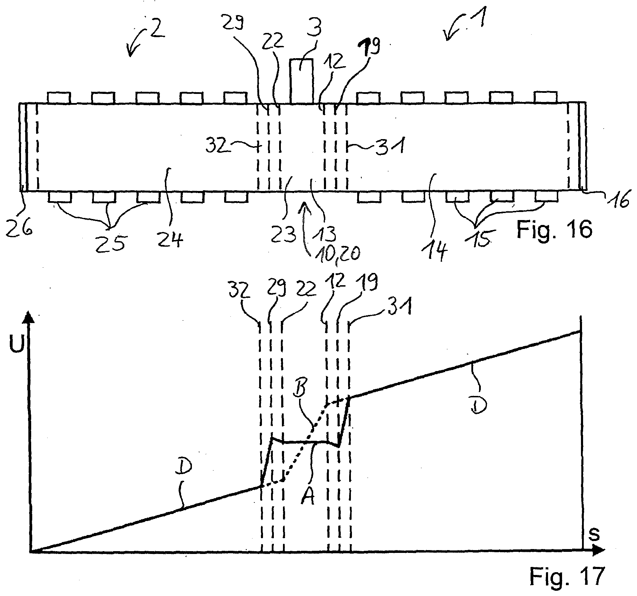

Die Figur 16 zeigt eine Ausführungsform eines lonenmobilitätsspektrometers mit axialer Anordnung der Driftkammern 14, 24, bei dem zusätzlich zu den Mehrfunktionselektroden, d.h. der ersten und der zweiten Injektionselektrode 12, 22, und der ersten und der zweiten Zusatzelektrode 19, 29 jeweilige erste und zweite weitere Zusatzelektroden 31, 32 vorhanden sind, die der jeweiligen Zusatzelektrode 19, 29 in Richtung der jeweiligen Driftkammer 14, 24 vorgelagert sind.

Die Figur 17 zeigt vorteilhafte Potentialverläufe bei einem lonenmobilitätsspektrometer gemäß Figur 16. Durch die durchgezogenen Linien wird wiederum der Potentialverlauf während des Ionenerzeugungszeitraums dargestellt, durch die punktierten Linien der Potentialverlauf während des Ioneninjektionszeitraums. Auf diese Weise lässt sich das Extended-Field Switching vorteilhaft realisieren, ohne dass das Potential bzw. der Potentialverlauf D in der jeweiligen Driftkammer 14, 24 verändert werden muss. Durch die erste und zweite weitere Zusatzelektrode 31, 32 kann dabei der Übergang des Potentialgradienten zwischen dem Ionentor und der jeweiligen Driftkammer reguliert werden.

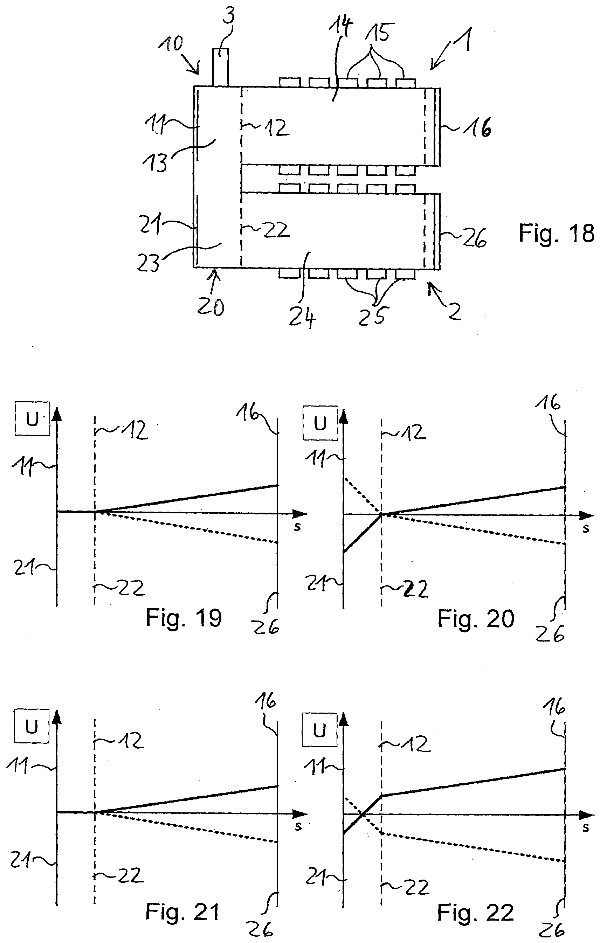

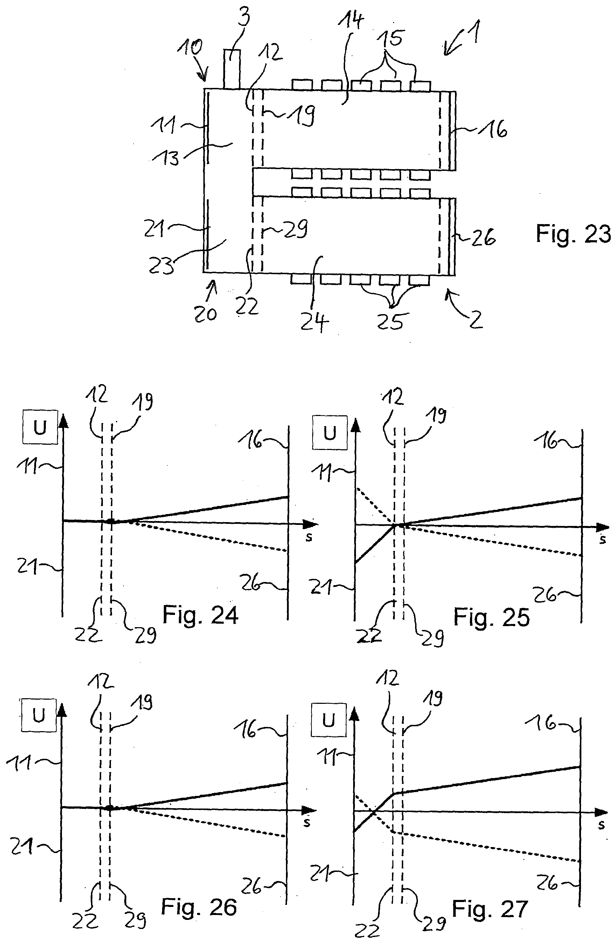

Die Figur 18 zeigt ein lonenmobilitätsspektrometer mit paralleler Anordnung der Driftkammern 14, 24, das im Wesentlichen der Ausführungsform der Figur 2 entspricht. In den Figuren 19 bis 22 werden vorteilhafte Potentialverläufe während des Ionenerzeugungszeitraums und des Ioneninjektionszeitraums dargestellt. Hierbei wird in der oberen Hälfte des jeweiligen Diagramms der Potentialverlauf in der oberen Hälfte des lonenmobilitätsspektrometers dargestellt, und durch die untere Hälfte des Diagramms der Potentialverlauf in der unteren Hälfte des lonenmobilitätsspektrometers. Zur weiteren Unterscheidung wird hierbei der Potentialverlauf in der oberen Hälfte des lonenmobilitätsspektrometers mit einer durchgezogenen Linie dargestellt, der Potentialverlauf in der unteren Hälfte mit einer punktierten Linie. Diese Zuordnung gilt auch für die Figuren 24 bis 27 und 29 bis 32.

Die Figur 19 zeigt einen Potentialverlauf während des Ionenerzeugungszeitraums, die Figur 20 einen zugehörigen Potentialverlauf während des Ioneninjektionszeitraums. Es wird dabei davon ausgegangen, dass beide Field Switching Ionentore eine gemeinsame Injektionselektrode 12, 22 nutzen, bzw. dass diese Injektionselektroden 12, 22 auf gleichem Potential liegen. Auch eine gemeinsame Gegenelektrode 11, 21 wäre möglich. Die Figuren 19 und 20 zeigen dabei vorteilhafte Schaltzyklen in einem normalen Field Switching Betrieb der Ionentore 10, 20. Eine Potentialumschaltung wird dabei lediglich an der jeweiligen Gegenelektrode 11, 21 durchgeführt.

Die Figuren 21 und 22 zeigen im Unterschied hierzu Potentialverläufe, bei denen eine Potentialumschaltung sowohl an den Injektionselektroden 12, 22 als auch an den Gegenelektroden 11, 21 durchgeführt wird, was bei der Figur 22 zu dem sich überkreuzenden Verlauf der Potentiale in den Ionisationskammern 13, 23 führt. Die Figur 21 zeigt hierbei wiederum den Potentialverlauf während des Ionenerzeugungszeitraums, die Figur 22 während des Ioneninjektionszeitraums.

Die Ausführungsform gemäß den Figuren 21 und 22 hat den Vorteil, dass die gleiche Feldstärke zwischen einem jeweiligen Paar von Gegenelektrode und Injektionselektrode herrscht, aber die Potentialdifferenz zwischen den Gegenelektroden 11, 21 geringer ist. Hierdurch kann z.B. Durchschlägen vorgebeugt werden. Zudem wird die Ansteuerung vereinfacht, da manche Potentiale mehrfach genutzt werden können. Wie man erkennt, erfordert die Ausführungsform gemäß den Figuren 21 und 22, die im Wesentlichen den Verfahren aus den Figur 11, 12 entspricht, eine Potentialumschaltung an den jeweiligen Detektoren 16, 26, wenn letztendlich der gleiche Potentialgradient in der Driftkammer 14, 24 erreicht werden soll. Alternativ kann das Potential am jeweiligen Detektor konstant gehalten werden, was zu einem verringerten Potentialgradienten in der jeweiligen Driftkammer 14, 24 führt.

Die Figur 23 zeigt ein lonenmobilitätsspektrometer, das weitgehend der Ausführungsform der Figur 18 entspricht. Im Unterschied zur Figur 18 sind bei der Ausführungsform der Figur 23 der jeweiligen Driftkammer 14, 24 eine jeweilige erste und zweite Zusatzelektrode 19, 29 vorgeordnet. Dementsprechend kann bei der Ausführungsform der Figur 23 vorteilhaft das Extended-Field Switching in beiden Ionentoren durchgeführt werden.

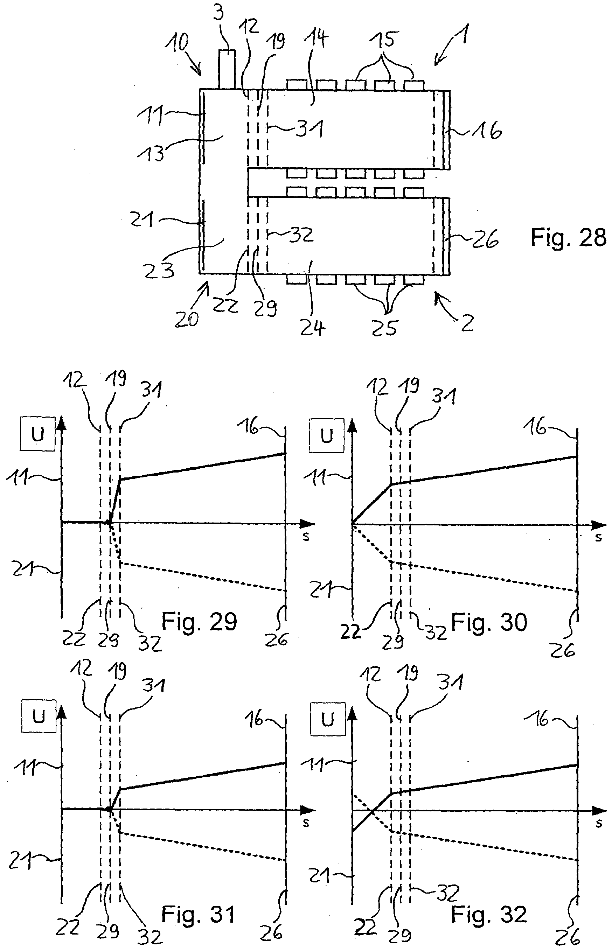

Die Figuren 24 und 25 zeigen mögliche Potentialverläufe bei der Ausführungsform der Figur 23, wobei die Potentialverläufe gemäß Figuren 24 und 25 weitgehend der Ausführungsform der Figuren 19 und 29 entspricht. Im Raum zwischen der jeweiligen Injektionselektrode und der Zusatzelektrode wird dabei ein Abschirmfeld mit einem entsprechenden gegensätzlichen Gradienten zum Feld in der jeweiligen Driftkammer erzeugt, um den Durchgriff des Feldes aus der Driftkammer in die Ionisationskammer zu neutralisieren. Die Figur 24 zeigt dabei den Potentialverlauf während des Ionenerzeugungszeitraums, die Figur 25 den Potentialverlauf während des Ioneninjektionszeitraums.

Die Figuren 26 und 27 zeigen vergleichbare Potentialverläufe zu den Figuren 21 und 22. Im Unterschied zu den Figuren 21 und 22 werden bei den Figuren 26 und 27 wiederum die entsprechenden Felder zwischen der Injektionselektrode und der Zusatzelektrode zur Neutralisierung des Felddurchgriffs erzeugt. Die Figur 26 zeigt dabei den Potentialverlauf während des Ionenerzeugungszeitraums, die Figur 27 während des Ioneninjektionszeitraums.

Die Figur 28 zeigt eine Ausführungsform eines lonenmobilitätsspektrometers, das weitgehend der Ausführungsform der Figur 23 entspricht. Im Unterschied zur Figur 23 sind bei der Ausführungsform der Figur 28 noch die bereits erwähnte weitere erste Zusatzelektrode 31 und die weitere zweite Zusatzelektrode 32 vorhanden. Die weitere erste Zusatzelektrode 31 ist dabei der ersten Zusatzelektrode 19 in Richtung der ersten Driftkammer 14 vorgelagert, die weitere zweite Zusatzelektrode 32 ist der zweiten Zusatzelektrode 29 in Richtung der zweiten Driftkammer 24 vorgelagert.

Durch diese Gestaltung der Elektroden kann bei der Ausführungsform der Figur 28 sowohl das Extended-Field Switching als auch das Doppel-Field Switching realisiert werden, d.h. das Komprimieren der Ionenpakete im zweiten Kompressionsschritt.

Die Figuren 29 und 30 zeigen vorteilhafte Potentialverläufe bei einem Ionenmobilitätsspektrometer gemäß Figur 28, die analog zur Umschaltlogik der Figuren 19 und 20 ausgeführt sind. Die Figur 29 zeigt die Potentialverläufe während des Ionenerzeugungszeitraums, die Figur 30 während des Ioneninjektionszeitraums.

Die Figuren 31 und 32 zeigen Potentialverläufe, die analog zu der Ausführungsform der Figuren 21 und 22 sind. Erkennbar ist, dass insbesondere während des Ionenerzeugungszeitraums ein relativ steiler Potentialgradient im Raum zwischen der jeweiligen Zusatzelektrode und der weiteren Zusatzelektrode erzeugt wird. Die Figur 31 zeigt die Potentialverläufe während des Ionenerzeugungszeitraums, die Figur 32 während des Ioneninjektionszeitraums.

Figur 29 und 31 zeigen aufgrund des steilen Potentialgradienten damit auch möglich Potentialverläufe für den zweiten Kompressionsschritt beim Doppel-Field-Switching.

### Bezugszeichenliste

- 1, 2: lonenmobilitätsspektrometer (erste IMS-Röhre, zweite IMS-Röhre)
- 3: Ionisationsquelle
- 10: erstes Ionentor
- 11: erste Gegenelektrode
- 12: erste Injektionselektrode
- 13: erste Ionisationskammer
- 14: erste Driftkammer
- 15: erste Felderzeugungseinrichtung
- 16: erster Ionendetektor
- 17: erster Driftgas-Einlassanschluss
- 18: erster Driftgas-Auslassanschluss
- 19: erste Zusatzelektrode
- 20: zweites Ionentor
- 21: zweite Gegenelektrode
- 22: zweite Injektionselektrode
- 23: zweite Ionisationskammer
- 24: zweite Driftkammer
- 25: zweite Felderzeugungseinrichtung
- 26: zweiter Ionendetektor
- 27: zweiter Driftgas-Einlassanschluss
- 28: zweiter Driftgas-Auslassanschluss
- 29: zweite Zusatzelektrode
- 31: weitere erste Zusatzelektrode
- 32: weitere zweite Zusatzelektrode
- A: durchgezogene Linie
- B: gestrichelte Linie
- C: gepunktete Linie
- D: Potentialgradient
- U: elektrisches Potential
- s: Längserstreckung

## Patentansprüche

1. Verfahren zur Analyse von Proben durch lonenmobilitätsspektrometrie mittels eines lonenmobilitätsspektrometers (1, 2), das wenigstens eine erste Driftkammer (14) und ein erstes schaltbares Ionentor (10) zur gesteuerten Abgabe von Ionen in die erste Driftkammer (14) aufweist, wobei das erste Ionentor (10) als Field Switching Ionentor ausgebildet ist, das wenigstens eine erste Gegenelektrode (11) und eine erste Injektionselektrode (12) aufweist, wobei zwischen der ersten Gegenelektrode (11) und der ersten Injektionselektrode (12) eine erste Ionisationskammer (13) gebildet ist, in die von einer Ionisationsquelle (3) durch lonenmobilitätsspektrometrie zu analysierende Ionen zuführbar sind, wobei die erste Ionisationskammer (13) sich von der ersten Gegenelektrode (11) bis zur ersten Injektionselektrode (12) erstreckt, wobei mittels einer Ionisationsquelle (3) aus der Probe zu analysierende Ionen erzeugt und während eines Ionenerzeugungszeitraums in der ersten Ionisationskammer (13) in einem im Wesentlichen feldfreien Zustand der ersten Ionisationskammer (13) bereitgestellt werden, sodass idealerweise während dieses Ionenerzeugungszeitraums die bereitgestellten Ionen noch nicht aufgrund elektrischer Felder in irgendeiner Richtung bewegt werden, und die dabei erzeugten Ionen, gesteuert durch das erste Ionentor (10), in die erste Driftkammer (14) geführt werden, indem in einem Analyseschritt zumindest eine Elektrode des Field Switching Ionentors umgeschaltet wird, wodurch die Ionen in Richtung der ersten Driftkammer (14) in Bewegung gesetzt werden, **dadurch gekennzeichnet, dass** zwischen dem ersten Ionentor (10) und der ersten Driftkammer (14) wenigstens eine erste Zusatzelektrode (19) angeordnet ist, durch die mittels des ersten Ionentors (10) in die erste Driftkammer (14) abzugebende Ionen zusätzlich beeinflussbar sind, mit einem oder beiden der folgenden Merkmale a), b):
a) ein in der ersten Ionisationskammer (13) bereitgestelltes Ionenpaket wird in einem ersten Kompressionsschritt durch Umschalten der Potentialdifferenz zwischen der ersten Injektionselektrode (12) und der ersten Gegenelektrode (11) ein erstes Mal komprimiert und nach Passieren der ersten Injektionselektrode (12) in einem zweiten Kompressionsschritt durch Umschalten der Potentialdifferenz zwischen der ersten Zusatzelektrode (19) und der ersten Injektionselektrode (12) wenigstens ein zweites Mal komprimiert wird, bevor das Ionenpaket in die erste Driftkammer (14) abgegeben wird,
b) in der ersten Ionisationskammer (13) erzeugte Ionen werden zumindest während des Ionenerzeugungszeitraums durch die erste Zusatzelektrode (19), deren Abstand von der ersten Injektionselektrode (12) geringer ist als der Abstand zwischen der ersten Gegenelektrode (11) und der ersten Injektionselektrode (12), von Anteilen eines in der ersten Driftkammer (14) erzeugten elektrischen Felds im Wesentlichen abgeschirmt.

2. Verfahren nach Anspruch 1, **dadurch gekennzeichnet, dass** das Öffnen und Schließen des ersten Ionentors (10) durch Potentialumschaltung der Injektionselektrode (12, 22) und/oder der Gegenelektrode (11, 21) des jeweiligen Ionentors (10, 20) erfolgt.

3. Verfahren nach einem der Ansprüche 1 bis 2, **dadurch gekennzeichnet, dass** im ersten Kompressionsschritt der Potentialgradient (D) zwischen der ersten Gegenelektrode (11) und der ersten Injektionselektrode (12) größer ist als der Potentialgradient (D) in der Driftkammer (14, 24).

4. Verfahren nach einem der Ansprüche 1 bis 3, **dadurch gekennzeichnet, dass** im zweiten Kompressionsschritt der Potentialgradient (D) zwischen der ersten Injektionselektrode (12) und der ersten Zusatzelektrode (19) größer ist als der Potentialgradient (D) in der Driftkammer (14, 24).

5. Verfahren nach einem der Ansprüche 1 bis 4, **dadurch gekennzeichnet, dass** der Potentialgradient (D) zwischen der ersten Injektionselektrode (12) und der ersten Zusatzelektrode (19) im zweiten Kompressionsschritt größer ist als im ersten Kompressionsschritt.

6. Verfahren nach einem der Ansprüche 1 bis 5, **dadurch gekennzeichnet, dass** im ersten Kompressionsschritt der Potentialgradient (D) zwischen der ersten Injektionselektrode (12) und der ersten Zusatzelektrode (19) im Wesentlichen gleich dem Potentialgradienten (D) der Driftkammer (14, 24) ist.

7. Verfahren nach einem der Ansprüche 1 bis 5, **dadurch gekennzeichnet, dass** im ersten Kompressionsschritt der Potentialgradient (D) zwischen der ersten Injektionselektrode (12) und der ersten Zusatzelektrode (19) größer als der Potentialgradient (D) zwischen der ersten Gegenelektrode (11) und der ersten Injektionselektrode (12) und größer als der Potentialgradient (D) der Driftkammer (14, 24) ist.

8. Verfahren nach einem der Ansprüche 1 bis 7, **dadurch gekennzeichnet, dass** der Potentialgradient (D) zwischen der ersten Injektionselektrode (12) und der zum Abschirmen eingesetzten Elektrode, d.h. der ersten Zusatzelektrode (19), zumindest während des Ionenerzeugungszeitraums gleich Null oder entgegengesetzt zum Potentialgradienten (D) in der Driftkammer (14, 24) ist.

9. Verfahren nach einem der Ansprüche 1 bis 8, **dadurch gekennzeichnet, dass** beim Schalten in den ersten Kompressionsschritt der Potentialgradient (D) zwischen der ersten Injektionselektrode (12) und der ersten Zusatzelektrode (19) später als der Potentialgradient (D) zwischen der ersten Gegenelektrode (11) und der ersten Injektionselektrode (12) geschaltet wird,

10. Verfahren nach einem der Ansprüche 1 bis 8, **dadurch gekennzeichnet, dass** beim Verlassen des ersten Kompressionsschritts der Potentialgradient (D) zwischen der ersten Gegenelektrode (11) und der ersten Injektionselektrode (12) früher als der Potentialgradient (D) zwischen der ersten Injektionselektrode (12) und der ersten Zusatzelektrode (19) geschaltet wird.

11. lonenmobilitätsspektrometer (1, 2), das wenigstens eine erste Driftkammer (14) und ein erstes schaltbares Ionentor (10) zur gesteuerten Abgabe von Ionen in die erste Driftkammer (14) aufweist, wobei das erste Ionentor (10) als Field Switching Ionentor ausgebildet ist, das wenigstens eine erste Gegenelektrode (11) und eine erste Injektionselektrode (12) aufweist, wobei zwischen der ersten Gegenelektrode (11) und der ersten Injektionselektrode (12) eine erste Ionisationskammer (13) gebildet ist, in die von einer Ionisationsquelle (3) durch Ionenmobilitätsspektrometrie zu analysierende Ionen zuführbar sind, wobei die erste Ionisationskammer (13) sich von der ersten Gegenelektrode (11) bis zur ersten Injektionselektrode (12) erstreckt, wobei das lonenmobilitätsspektrometer (1, 2) dazu eingerichtet ist, die zu analysierenden Ionen während eines Ionenerzeugungszeitraums in der ersten Ionisationskammer (13) oder in einem im Wesentlichen feldfreien Zustand der Ionisationskammer bereitzustellen, sodass während dieses Ionenerzeugungszeitraums die bereitgestellten Ionen idealerweise noch nicht aufgrund elektrischer Felder in irgendeiner Richtung bewegt werden, und in einem Analyseschritt zumindest eine Elektrode des Field Switching lonentors umzuschalten, wodurch die Ionen in Richtung der ersten Driftkammer (14) in Bewegung gesetzt werden, **dadurch gekennzeichnet, dass** zwischen dem ersten Ionentor (10) und der ersten Driftkammer (14) wenigstens eine erste Zusatzelektrode (19) angeordnet ist, durch die mittels des ersten Ionentors (10) in die erste Driftkammer (14) abzugebende Ionen zusätzlich beeinflussbar sind, wobei der Abstand zwischen der ersten Zusatzelektrode (19) und der ersten Injektionselektrode (12) geringer ist als der Abstand zwischen der ersten Gegenelektrode (11) und der ersten Injektionselektrode (12), wobei das lonenmobilitätsspektrometer (1, 2) zur Durchführung eines Verfahrens nach einem der vorhergehenden Ansprüche eingerichtet ist.

12. lonenmobilitätsspektrometer (1, 2) nach Anspruch 11, **dadurch gekennzeichnet, dass** die erste Zusatzelektrode (19) am dem ersten Ionentor (10) zugewandten Ende der ersten Driftkammer (14) angeordnet ist.

13. lonenmobilitätsspektrometer (1, 2) nach einem der Ansprüche 11 bis 12,
**dadurch gekennzeichnet, dass** die erste Zusatzelektrode (19) nicht potentialumschaltbar ausgebildet ist.

14. lonenmobilitätsspektrometer (1, 2) nach einem der Ansprüche 11 bis 12
**dadurch gekennzeichnet, dass** die erste Zusatzelektrode (19) potentialumschaltbar ausgebildet ist.

15. lonenmobilitätsspektrometer (1, 2) nach einem der Ansprüche 11 bis 14, **dadurch gekennzeichnet, dass** das lonenmobilitätsspektrometer (1, 2) wenigstens eine von der ersten Driftkammer (14) getrennte zweite Driftkammer (24) und ein zweites schaltbares Ionentor (20) zur gesteuerten Abgabe von Ionen in die zweite Driftkammer (24) aufweist, wobei das erste Ionentor (10) und/oder das zweite Ionentor (20) als Field Switching Ionentor ausgebildet ist.

16. lonenmobilitätsspektrometer (1, 2) nach einem der Ansprüche 11 bis 15, **dadurch gekennzeichnet, dass** das lonenmobilitätsspektrometer (1, 2) keine zusätzliche Felderzeugungseinrichtung (15, 25) zur Erzeugung eines elektrischen Felds in der ersten und/oder zweiten Ionisationskammer (13, 23) aufweist, sodass in der ersten Ionisationskammer (13) lediglich durch Elektroden des ersten Ionentors (10) ein elektrisches Feld erzeugbar ist und/oder in der zweiten Ionisationskammer (23) lediglich durch Elektroden des zweiten Ionentors (20) ein elektrisches Feld erzeugbar ist.

17. lonenmobilitätsspektrometer (1, 2) nach einem der Ansprüche 11 bis 16, **dadurch gekennzeichnet, dass** das lonenmobilitätsspektrometer (1, 2) als Ionisationsquelle (3) eine Röntgenionisationsquelle, eine UV-Ionisationsquelle, eine Koronaionisationsquelle, eine Plasmaionisationsquelle, eine dielektrisch behinderte Entladungsquelle und/oder einen Elektronenstrahler aufweist.

## Claims

1. Method for analyzing samples by ion mobility spectrometry using an ion mobility spectrometer (1, 2) which has at least one first drift chamber (14) and a first switchable ion gate (10) for the controlled delivery of ions into the first drift chamber (14), wherein the first ion gate (10) is designed as a field switching ion gate, which has at least one first counter electrode (11) and a first injection electrode (12), wherein a first ionization chamber (13) is formed between the first counter electrode (11) and the first injection electrode (12), into which ions to be analyzed by ion mobility spectrometry can be fed from an ionization source (3), wherein the first ionization chamber (13) extends from the first counter electrode (11) to the first injection electrode (12), wherein ions to be analyzed from the sample are generated by means of an ionization source (3) which generates ions to be analyzed from the sample and provides them in the first ionization chamber (13) during an ion generation period in a substantially field-free state of the first ionization chamber (13), so that, ideally, during this ion generation period, the provided ions are not yet moved in any direction due to electric fields, and the ions generated in this way are guided into the first drift chamber (14) by means of the first ion gate (10) being switched in an analysis step, whereby the ions are set in motion in the direction of the first drift chamber (14), **characterized in that** at least one first additional electrode (19) is arranged between the first ion gate (10) and the first drift chamber (14), by means of which the ions to be delivered into the first drift chamber (14) by means of the first ion gate (10) can be additionally influenced, with one or both of the following features a), b):
a) An ion packet provided in the first ionization chamber (13) is compressed for the first time in a first compression step by switching the potential difference between the first injection electrode (12) and the first counter electrode (11) and, after passing the first injection electrode (12), is compressed at least a second time in a second compression step by switching the potential difference between the first additional electrode (19) and the first injection electrode (12) before the ion packet is discharged into the first drift chamber (14),
b) Ions generated in the first ionization chamber (13) are substantially shielded from portions of an electric field generated in the first drift chamber (14) at least during the ion generation period by the first additional electrode (19), whose distance from the first injection electrode (12) is smaller than the distance between the first counter electrode (11) and the first injection electrode (12).

2. Method according to claim 1, **characterized in that** the opening and closing of the first ion gate (10) is effected by switching the potential of the injection electrode (12, 22) and/or the counter electrode (11, 21) of the respective ion gate (10, 20).

3. Method according to one of claims 1 to 2, **characterized in that** in the first compression step, the potential gradient (D) between the first counter electrode (11) and the first injection electrode (12) is greater than the potential gradient (D) in the drift chamber (14, 24).

4. Method according to one of claims 1 to 3, **characterized in that**, in the second compression step, the potential gradient (D) between the first injection electrode (12) and the first additional electrode (19) is greater than the potential gradient (D) in the drift chamber (14, 24).

5. Method according to one of claims 1 to 4, **characterized in that** the potential gradient (D) between the first injection electrode (12) and the first additional electrode (19) is greater in the second compression step than in the first compression step.

6. Method according to one of claims 1 to 5, **characterized in that** in the first compression step, the potential gradient (D) between the first injection electrode (12) and the first additional electrode (19) is essentially equal to the potential gradient (D) of the drift chamber (14, 24).

7. Method according to one of claims 1 to 5, **characterized in that**, in the first compression step, the potential gradient (D) between the first injection electrode (12) and the first additional electrode (19) is greater than the potential gradient (D) between the first counter electrode (11) and the first injection electrode (12) and greater than the potential gradient (D) of the drift chamber (14, 24).

8. Method according to one of claims 1 to 7, **characterized in that** the potential gradient (D) between the first injection electrode (12) and the electrode used for shielding, i.e., the first additional electrode (19), is zero or opposite to the potential gradient (D) in the drift chamber (14, 24) at least during the ion generation period.

9. Method according to one of claims 1 to 8, **characterized in that**, when switching to the first compression step, the potential gradient (D) between the first injection electrode (12) and the first additional electrode (19) is switched later than the potential gradient (D) between the first counter electrode (11) and the first injection electrode (12),

10. Method according to one of claims 1 to 8, **characterized in that**, when leaving the first compression step, the potential gradient (D) between the first counter electrode (11) and the first injection electrode (12) is switched earlier than the potential gradient (D) between the first injection electrode (12) and the first additional electrode (19).

11. Ion mobility spectrometer (1, 2) comprising at least one first drift chamber (14) and a first switchable ion gate (10) for the controlled release of ions into the first drift chamber (14), wherein the first ion gate (10) is designed as a field switching ion gate comprising at least one first counter electrode (11) and a first injection electrode (12), wherein a first ionization chamber (13) is formed between the first counter electrode (11) and the first injection electrode (12), into which ions to be analyzed by ion mobility spectrometry can be fed from an ionization source (3), wherein the first ionization chamber (13) extends from the first counter electrode (11) to the first injection electrode (12), wherein the ion mobility spectrometer (1, 2) is designed to provide the ions to be analyzed in the first ionization chamber (13) during an ion generation period or in a substantially field-free state of the ionization chamber, so that during this ion generation period the supplied ions are ideally not yet moved in any direction due to electric fields, and in an analysis step to switch at least one electrode of the field switching ion gate, thereby setting the ions in motion in the direction of the first drift chamber (14), **characterized in that** at least one first additional electrode (19) is arranged between the first ion gate (10) and the first drift chamber (14), by means of which the ions to be delivered into the first drift chamber (14) by means of the first ion gate (10) can be additionally influenced, wherein the distance between the first additional electrode (19) and the first injection electrode (12) is smaller than the distance between the first counter electrode (11) and the first injection electrode (12), wherein the ion mobility spectrometer (1, 2) is designed to carry out a method according to one of the preceding claims.

12. Ion mobility spectrometer (1, 2) according to claim 11, **characterized in that** the first additional electrode (19) is arranged at the end of the first drift chamber (14) facing the first ion gate (10).

13. Ion mobility spectrometer (1, 2) according to one of claims 11 to 12, **characterized in that** the first additional electrode (19) is designed to be not potential-switchable.

14. Ion mobility spectrometer (1, 2) according to one of claims 11 to 12 , **characterized in that** the first additional electrode (19) is designed to be potential-switchable.

15. Ion mobility spectrometer (1, 2) according to one of claims 11 to 14, **characterized in that** the ion mobility spectrometer (1, 2) has at least one second drift chamber (24) separated from the first drift chamber (14) and a second switchable ion gate (20) for the controlled delivery of ions into the second drift chamber (24), wherein the first ion gate (10) and/or the second ion gate (20) is designed as a field switching ion gate.

16. Ion mobility spectrometer (1, 2) according to one of claims 11 to 15, **characterized in that** the ion mobility spectrometer (1, 2) has no additional field generating device (15, 25) for generating an electric field in the first and/or second ionization chamber (13, 23), so that an electric field can be generated in the first ionization chamber (13) solely by electrodes of the first ion gate (10) and/or an electric field can be generated in the second ionization chamber (23) solely by electrodes of the second ion gate (20).

17. Ion mobility spectrometer (1, 2) according to any one of claims 11 to 16, **characterized in that** the ion mobility spectrometer (1, 2) has as an ionization source (3) an X-ray ionization source, a UV ionization source, a corona ionization source, a plasma ionization source, a dielectric barrier discharge source, and/or an electron gun.

## Revendications

1. Procédé d'analyse d'échantillons par spectrométrie à mobilité ionique à l'aide d'un spectromètre à mobilité ionique (1, 2) qui comporte au moins une première chambre de dérive (14) et une première porte à ions commutable (10) pour l'émission commandée d'ions dans la première chambre de dérive (14), sachant que
la première porte à ions (10) est conçue comme une porte à ions à commutation de champ qui comporte au moins une première contre-électrode (11) et une première électrode d'injection (12),
une première chambre d'ionisation (13) est formée entre la première contre-électrode (11) et la première électrode d'injection (12), dans laquelle peuvent être amenés des ions à analyser par spectrométrie à mobilité ionique depuis une source d'ionisation (3),
la première chambre d'ionisation (13) s'étend de la première contre-électrode (11) à la première électrode d'injection (12),
au moyen d'une source d'ionisation (3), des ions à analyser, provenant de l'échantillon, sont générés et fournis pendant une période de génération d'ions dans la première chambre d'ionisation (13), dans un état sensiblement exempt de champ de la première chambre d'ionisation (13), de sorte que, idéalement, pendant cette période de génération d'ions, les ions fournis ne sont pas encore déplacés dans une direction quelconque en raison de champs électriques,
et les ions ainsi générés, commandés par la première porte à ions (10), sont amenés dans la première chambre de dérive (14) par commutation d'au moins une électrode de la porte à ions à commutation de champ lors d'une étape d'analyse, moyennant quoi les ions sont mis en mouvement en direction de la première chambre de dérive (14),
**caractérisé en ce qu'**au moins une première électrode supplémentaire (19) est disposée entre la première porte à ions (10) et la première chambre de dérive (14), laquelle permet d'influencer de manière supplémentaire les ions à émettre dans la première chambre de dérive (14) au moyen de la première porte à ions (10),
présentant l'une ou les deux des caractéristiques suivantes a), b) :
a) un paquet d'ions fourni dans la première chambre d'ionisation (13) est comprimé une première fois, dans une première étape de compression, par commutation de la différence de potentiel entre la première électrode d'injection (12) et la première contre-électrode (11) et, après avoir passé la première électrode d'injection (12), il est comprimé au moins une deuxième fois, dans une deuxième étape de compression, par commutation de la différence de potentiel entre la première électrode supplémentaire (19) et la première électrode d'injection (12) avant que le paquet d'ions ne soit émis dans la première chambre de dérive (14),
b) les ions générés dans la première chambre d'ionisation (13) sont, au moins pendant la période de génération d'ions, sensiblement protégés vis-à-vis des composantes d'un champ électrique, généré dans la première chambre de dérive (14), grâce à la première électrode supplémentaire (19) dont la distance par rapport à la première électrode d'injection (12) est inférieure à la distance entre la première contre-électrode (11) et la première électrode d'injection (12).

2. Procédé selon la revendication 1,
**caractérisé en ce que** l'ouverture et la fermeture de la première porte à ions (10) s'effectuent par commutation de potentiel de l'électrode d'injection (12, 22) et/ou de la contre-électrode (11, 21) de la porte à ions respective (10, 20).

3. Procédé selon l'une des revendications 1 à 2,
**caractérisé en ce que**, dans la première étape de compression, le gradient de potentiel (D) entre la première contre-électrode (11) et la première électrode d'injection (12) est supérieur au gradient de potentiel (D) dans la chambre de dérive (14, 24).

4. Procédé selon l'une des revendications 1 à 3,
**caractérisé en ce que**, dans la deuxième étape de compression, le gradient de potentiel (D) entre la première électrode d'injection (12) et la première électrode supplémentaire (19) est supérieur au gradient de potentiel (D) dans la chambre de dérive (14, 24).

5. Procédé selon l'une des revendications 1 à 4,
**caractérisé en ce que** le gradient de potentiel (D) entre la première électrode d'injection (12) et la première électrode supplémentaire (19) est plus important lors de la deuxième étape de compression que lors de la première étape de compression.

6. Procédé selon l'une des revendications 1 à 5,
**caractérisé en ce que**, lors de la première étape de compression, le gradient de potentiel (D) entre la première électrode d'injection (12) et la première électrode supplémentaire (19) est sensiblement égal au gradient de potentiel (D) de la chambre de dérive (14, 24).

7. Procédé selon l'une des revendications 1 à 5,
**caractérisé en ce que**, dans la première étape de compression, le gradient de potentiel (D) entre la première électrode d'injection (12) et la première électrode supplémentaire (19) est supérieur au gradient de potentiel (D) entre la première contre-électrode (11) et la première électrode d'injection (12) et supérieur au gradient de potentiel (D) de la chambre de dérive (14, 24).

8. Procédé selon l'une des revendications 1 à 7,
**caractérisé en ce que** le gradient de potentiel (D) entre la première électrode d'injection (12) et l'électrode utilisée pour la protection, c'est-à-dire la première électrode supplémentaire (19), est égal à zéro ou opposé au gradient de potentiel (D) dans la chambre de dérive (14, 24), au moins pendant la période de génération d'ions.

9. Procédé selon l'une des revendications 1 à 8,
**caractérisé en ce que**, lors de la commutation vers la première étape de compression, le gradient de potentiel (D) entre la première électrode d'injection (12) et la première électrode supplémentaire (19) est commuté plus tard que le gradient de potentiel (D) entre la première contre-électrode (11) et la première électrode d'injection (12).

10. Procédé selon l'une des revendications 1 à 8,
**caractérisé en ce que**, à la sortie de la première étape de compression, le gradient de potentiel (D) entre la première contre-électrode (11) et la première électrode d'injection (12) est commuté plus tôt que le gradient de potentiel (D) entre la première électrode d'injection (12) et la première électrode supplémentaire (19).

11. Spectromètre à mobilité ionique (1, 2) qui comprend au moins une première chambre de dérive (14) et une première porte à ions commutable (10) pour l'émission commandée d'ions dans la première chambre de dérive (14),
dans lequel
la première porte à ions (10) est conçue comme une porte à ions à commutation de champ qui comporte au moins une première contre-électrode (11) et une première électrode d'injection (12),
une première chambre d'ionisation (13) est formée entre la première contre-électrode (11) et la première électrode d'injection (12), dans laquelle peuvent être amenés des ions à analyser par spectrométrie à mobilité ionique depuis une source d'ionisation (3),
la première chambre d'ionisation (13) s'étend de la première contre-électrode (11) à la première électrode d'injection (12),
le spectromètre à mobilité ionique (1, 2) est conçu pour fournir les ions à analyser pendant une période de génération d'ions dans la première chambre d'ionisation (13) ou dans un état sensiblement exempt de champ de la chambre d'ionisation, de sorte que pendant cette période de génération d'ions, les ions fournis ne sont idéalement pas encore déplacés dans une direction quelconque en raison de champs électriques, et est conçu pour faire commuter, dans une étape d'analyse, au moins une électrode de la porte à ions à commutation de champ, moyennant quoi les ions sont mis en mouvement en direction de la première chambre de dérive (14),
**caractérisé en ce qu'**au moins une première électrode supplémentaire (19) est disposée entre la première porte à ions (10) et la première chambre de dérive (14), laquelle permet d'influencer de manière supplémentaire les ions à émettre dans la première chambre de dérive (14) au moyen de la première porte à ions (10),
la distance entre la première électrode supplémentaire (19) et la première électrode d'injection (12) étant inférieure à la distance entre la première contre-électrode (11) et la première électrode d'injection (12),
le spectromètre à mobilité ionique (1, 2) étant conçu pour mettre en œuvre un procédé selon l'une des revendications précédentes.

12. Spectromètre à mobilité ionique (1, 2) selon la revendication 11, **caractérisé en ce que** la première électrode supplémentaire (19) est disposée à l'extrémité de la première chambre de dérive (14) tournée vers la première porte à ions (10).

13. Spectromètre à mobilité ionique (1, 2) selon l'une des revendications 11 à 12,
**caractérisé en ce que** la première électrode supplémentaire (19) est conçue de manière à ne pas être commutable en potentiel.

14. Spectromètre à mobilité ionique (1, 2) selon l'une des revendications 11 à 12,
**caractérisé en ce que** la première électrode supplémentaire (19) est conçue de manière à être commutable en potentiel.

15. Spectromètre à mobilité ionique (1, 2) selon l'une des revendications 11 à 14,
**caractérisé en ce que** le spectromètre à mobilité ionique (1, 2) comprend au moins une deuxième chambre de dérive (24) séparée de la première chambre de dérive (14) et une deuxième porte à ions commutable (20) commutable pour l'émission commandée d'ions dans la deuxième chambre de dérive (24), la première porte à ions (10) et/ou la deuxième porte à ions (20) étant conçue comme une porte à ions à commutation de champ.

16. Spectromètre à mobilité ionique (1, 2) selon l'une des revendications 11 à 15,
**caractérisé en ce que** le spectromètre à mobilité ionique (1, 2) ne comprend pas de dispositif supplémentaire de génération de champ (15, 25) pour générer un champ électrique dans la première et/ou la deuxième chambre d'ionisation (13, 23), de sorte que dans la première chambre d'ionisation (13), un champ électrique ne peut être généré que par les électrodes de la première porte à ions (10), et/ou que dans la deuxième chambre d'ionisation (23), un champ électrique ne peut être généré que par les électrodes de la deuxième porte à ions (20).

17. Spectromètre à mobilité ionique (1, 2) selon l'une des revendications 11 à 16,
**caractérisé en ce que** le spectromètre à mobilité ionique (1, 2) comporte comme source d'ionisation (3) une source d'ionisation à rayons X, une source d'ionisation UV, une source d'ionisation à effet corona, une source d'ionisation à plasma, une source de décharge à barrière diélectrique et/ou un émetteur d'électrons.
